# EUROPEAN PATENT APPLICATION

(11) **EP 4 711 423 A1**
(43) Date of publication of application: **18.03.2026**
(21) Application number: 24874552.3
(22) Date of filing: 27.09.2024
(51) Int. Cl.: C09D 1/00, C09D 7/61, C09D 183/04

(54) **COATING FILM**

(30) Priority: 02.10.2023 JP 2023171458; 30.08.2024 JP 2024148202
(71) Applicant: Hardolass Holdings Co.,Ltd., Tokyo 135-0064 (JP)
(72) Inventor: KANAWA, Shizuka, Tokyo 104-6017 (JP); HIOKI, Shogo, Tokyo 104-6017 (JP); TAWARA, Chizuko, Tokyo 104-6017 (JP); ANDO, Tsutomu, Tokyo 104-6017 (JP); IKEDA, Masanori, Tokyo 104-6017 (JP)
(74) Representative: Ashton, Gareth Mark
(86) International application number: PCT/JP2024/034594
(87) International publication number: WO 2025/074948

(57) **Abstract**

Provided is an organic/inorganic hybrid coating film containing a large amount of silver ions, copper ions, and zinc ions, having an excellent antibacterial/antiviral function, an excellent antifungal function, and an excellent deodorizing function, capable of reliably killing various bacteria, various viruses, and various mold fungi, and capable of reliably removing an unpleasant odor.

The organic/inorganic hybrid coating film is a glass-based coating film based on silicon oxide (SiO₂), and in the coating film, glass particles are conductive glass composed of at least one type among silver ions (Ag⁺), copper ions (Cu²⁺), and zinc ions (Zn²⁺), and the glass particles include glass based on at least one type among vanadium oxide (V₂O₅), tungsten oxide (WO₃), and molybdenum oxide (MoO₃), and phosphorus oxide (P₂O₅).

## Description

### Technical Field

The present invention relates to a coating film.

### Background Art

Coated glass is disclosed that is formed of a glass base body and a coat formed on the surface of the glass base body, the coat using silicon oxide as a matrix, containing silver ions, containing ions of at least one type of alkali metal selected from sodium, potassium, and lithium, having a ΔYI of 1.8 or less, the ΔYI being obtained by subtracting a value before a moisture resistance test in which the coat is held in a high temperature and high humidity tank at 85°C and 85%RH for 1,000 hours from a value after the moisture resistance test for yellowness YI calculated by measurement in accordance with JIS-K7373 (2006) before and after the moisture resistance test, and having an antibacterial activity value of 2.0 or more after 1 hour from the start of an antibacterial test that is conducted under conditions of 25°C in a dark place by applying JIS Z 2801 (2010) mutatis mutandis using an alternative phage of Escherichia coli, Staphylococcus aureus, or an influenza virus on the surface of the coat (refer to Patent Literature 1). This coated glass is used as a glass window for buildings and automobiles. The coated glass has an antibacterial/antiviral property by containing silver, and can suppress the occurrence of yellowing due to silver.

### Citation List

### Patent Literature

Patent Literature 1: JP 2016-33109 A

### Summary of Invention

### Technical Problem

In the coated glass disclosed in Patent Literature 1, since the coat uses silicon oxide as a matrix, it is difficult to introduce a large amount of silver ions into the coat. Since the coat does not contain a large amount of silver ions, the coat has a poor antibacterial/antiviral function, it is difficult to reliably kill various bacteria and various viruses, and the antibacterial/antiviral function of the coat cannot be maintained for a long period of time. In addition, this coated glass is made by forming, on the surface of the glass base body, the coat using silicon oxide as a matrix, and containing silver ions, and ions of at least one type of alkali metal selected from sodium, potassium, and lithium. Therefore, the coat is not to be formed on a base material other than the glass base body, and cannot impart the antibacterial and antiviral properties to a base material other than the glass base body.

An object of the present invention is to provide a coating film into which a large amount of silver ions, copper ions, and zinc ions can be introduced, and containing a large amount of silver ions, copper ions, and zinc ions. Another object of the present invention is to provide a coating film having an excellent antibacterial/antiviral function, an excellent antifungal function, and an excellent deodorizing function, capable of reliably killing various bacteria, various viruses, and various mold fungi, and capable of reliably removing an unpleasant odor. Another object of the present invention is to provide a coating film capable of imparting an excellent antibacterial/antiviral function, an excellent antifungal function, and an excellent deodorizing function to all objects to be coated without being limited to a particular object to be coated, and capable of maintaining the antibacterial/antiviral function, the antifungal function, and the deodorizing function for a long period of time.

### Solution to Problem

A premise of the present invention for solving the above problems is a coating film in which glass particles are dispersively present.

A feature of the present invention in the above premise is that the coating film is a glass-based coating film based on silicon oxide (SiO₂), and the glass particles are conductive glass containing at least one type among silver ions (Ag⁺), copper ions (Cu²⁺), and zinc ions (Zn²⁺).

As an example of the present invention, the glass particles dispersively present in the coating film are conductive glass containing the silver ions (Ag⁺) among the silver ions (Ag⁺), the copper ions (Cu²⁺), and the zinc ions (Zn²⁺) and containing at least either of the copper ions (Cu²⁺) and the zinc ions (Zn²⁺).

As another example of the present invention, the glass particles dispersively present in the coating film are conductive glass containing only the silver ions (Ag⁺), conductive glass containing only the copper ions (Cu²⁺), and conductive glass containing only the ions (Zn²⁺).

As another example of the present invention, the glass particles dispersively present in the coating film are at least the conductive glass containing only the silver ions (Ag⁺) among the conductive glass containing only the silver ions (Ag⁺), the conductive glass containing only the copper ions (Cu²⁺), and the conductive glass containing only the zinc ions (Zn²⁺).

As an example of the present invention, the glass particles include glass based on at least one type among vanadium oxide (V₂O₅), tungsten oxide (WO₃), and molybdenum oxide (MoO₃), and phosphorus oxide (P₂O₅).

As another example of the present invention, the glass particles are vanadium oxide (V₂O₅)-phosphorus oxide (P₂O₅)-based glass containing the silver ions (Ag⁺).

As another example of the present invention, the glass particles further contain barium oxide (BaO).

As another example of the present invention, a content of the glass particles diffusively present in the coating film is 0.1 vol% or more to 30 vol% or less.

As another example of the present invention, the content of the glass particles diffusively present in the coating film is 0.2 vol% or more to 10 vol% or less.

As another example of the present invention, the glass particles have an average particle diameter D₅₀ of 5 µm or less.

As another example of the present invention, the glass particles have an average particle diameter D₅₀ of 3 µm or less.

As another example of the present invention, in the coating film, after a surface of a predetermined base material is coated with a coating liquid for forming the coating film, the metal ions of the glass particles mixed into the coating liquid diffuse into the coating film.

As another example of the present invention, in the coating film, the metal ions of the glass particles mixed into the coating liquid move to a surface of the coating film while diffusing inside the coating film.

As another example of the present invention, a stock solution of the coating liquid (starting material of the coating film) is a siloxane-based solution or a silica sol-based solution, and the glass particles are mixed into the siloxane-based solution or the silica sol-based solution.

As another example of the present invention, the coating film is a glass-based organic/inorganic hybrid coating film.

### Advantageous Effects of Invention

According to the coating film of the present invention, the coating film is a glass-based coating film based on silicon oxide (SiO₂), the glass particles are conductive glass composed of at least one type among silver ions (Ag⁺), copper ions (Cu²⁺), and zinc ions (Zn²⁺), and the glass particles containing the metal ions have electron conductivity. Therefore, it is possible to introduce a large amount of silver ions, copper ions, and zinc ions, and make the coating film contain the large amount of silver ions, copper ions, and zinc ions. Since the coating film contains the large amount of silver ions, copper ions, and zinc ions, the coating film has an excellent antibacterial/antiviral function, an excellent antifungal function, and an excellent deodorizing function, can reliably kill various bacteria, various viruses, and various mold fungi, and can reliably remove an unpleasant odor. The coating film can impart an excellent antibacterial/antiviral function, an excellent antifungal function, and an excellent deodorizing function to all base materials (objects to be coated) without being limited to a particular object to be coated with the coating film, and by containing the large amount of silver ions, copper ions, and zinc ions, can maintain the antibacterial/antiviral function, the antifungal function, and the deodorizing function for a long period of time.

In the coating film in which the glass particles are conductive glass containing the silver ions (Ag⁺) among the silver ions (Ag⁺), the copper ions (Cu²⁺), and the zinc ions (Zn²⁺) and containing at least either of the copper ions (Cu²⁺) and the zinc ions (Zn²⁺), the glass particles containing these metal ions have electron conductivity. Therefore, it is possible to introduce a large amount of silver ions, copper ions, and zinc ions, and make the coating film contain the large amount of silver ions, copper ions, and zinc ions. Since the glass particles contain the silver ions (Ag⁺) among the silver ions (Ag⁺), the copper ions (Cu²⁺), and the zinc ions (Zn²⁺) and contain at least either of the copper ions (Cu²⁺) and the zinc ions (Zn²⁺), the coating film has an excellent antibacterial/antiviral function, an excellent antifungal function, and an excellent deodorizing function, can reliably kill various bacteria, various viruses, and various mold fungi, can reliably remove an unpleasant odor, and can maintain the antibacterial/antiviral function, the antifungal function, and the deodorizing function for a long period of time.

In the coating film in which the glass particles are conductive glass containing only the silver ions (Ag⁺), conductive glass containing only the copper ions (Cu²⁺), and conductive glass containing only the zinc ions (Zn²⁺), the silver ions, the copper ions, and the zinc ions diffuse from the glass particles into the coating film at substantially the same time, which makes it possible to impart an excellent antibacterial/antiviral function, an excellent antifungal function, and an excellent deodorizing function to the coating film, to reliably kill various bacteria, various viruses, and various mold fungi, and to reliably remove an unpleasant odor.

In the coating film in which the glass particles are at least the conductive glass containing only the silver ions (Ag⁺) among the conductive glass containing only the silver ions (Ag⁺), the conductive glass containing only the copper ions (Cu²⁺), and the conductive glass containing only the zinc ions (Zn²⁺), at least the silver ions diffuse from the glass particles into the coating film, which makes it possible to impart an excellent antibacterial/antiviral function, an excellent antifungal function, and an excellent deodorizing function to the coating film, to reliably kill various bacteria, various viruses, and various mold fungi, and to reliably remove an unpleasant odor.

In the coating film in which the glass particles include glass based on at least one type among vanadium oxide (V₂O₅), tungsten oxide (WO₃), and molybdenum oxide (MoO₃), and phosphorus oxide (P₂O), the glass particles include the glass based on at least one type among vanadium oxide (V₂O₅), tungsten oxide (WO₃), and molybdenum oxide (MoO₃), and phosphorus oxide (P₂O₅), so that the glass particles have high electron conductivity. Therefore, it is possible to introduce a large amount of silver ions, copper ions, and zinc ions into the coating film, and make the coating film contain the large amount of silver ions, copper ions, and zinc ions. Since the coating film contains the large amount of silver ions, copper ions, and zinc ions, the coating film has an excellent antibacterial/antiviral function, an excellent antifungal function, and an excellent deodorizing function, can reliably kill various bacteria, various viruses, and various mold fungi, and can reliably remove an unpleasant odor. The coating film can impart an excellent antibacterial/antiviral function, an excellent antifungal function, and an excellent deodorizing function to all base materials (objects to be coated) without being limited to a particular object to be coated with the coating film, and by containing the large amount of silver ions, copper ions, and zinc ions, can maintain the antibacterial/antiviral function, the antifungal function, and the deodorizing function for a long period of time.

In the coating film in which the glass particles are vanadium oxide (V₂O₅)-phosphorus oxide (P₂O₅)-based glass containing the silver ions (Ag⁺), the vanadium oxide-phosphorus oxide-based glass containing the silver ions is used as the glass particles, so that the glass particles have high electron conductivity. Therefore, it is possible to introduce a large amount of silver ions, copper ions, and zinc ions into the coating film, and make the coating film contain the large amount of silver ions, copper ions, and zinc ions. Since the coating film contains the large amount of silver ions, copper ions, and zinc ions, the coating film has an excellent antibacterial/antiviral function, an excellent antifungal function, and an excellent deodorizing function, can reliably kill various bacteria, various viruses, and various mold fungi, and can reliably remove an unpleasant odor. The coating film can impart an excellent antibacterial/antiviral function, an excellent antifungal function, and an excellent deodorizing function to all base materials (objects to be coated) without being limited to a particular object to be coated with the coating film, and by containing the large amount of silver ions, copper ions, and zinc ions, can maintain the antibacterial/antiviral function, the antifungal function, and the deodorizing function for a long period of time.

In the coating film in which the glass particles are vanadium oxide (V₂O₅)-phosphorus oxide (P₂O₅)-barium oxide (BaO)-based glass containing the silver ions (Ag⁺), the vanadium oxide-phosphorus oxide-based glass containing the silver ions is used as the glass particles, so that the glass particles have high electron conductivity. Therefore, it is possible to introduce a large amount of silver ions, copper ions, and zinc ions into the coating film, and make the coating film contain the large amount of silver ions, copper ions, and zinc ions. Since the coating film contains the large amount of silver ions, copper ions, and zinc ions, the coating film has an excellent antibacterial/antiviral function, an excellent antifungal function, and an excellent deodorizing function, can reliably kill various bacteria, various viruses, and various mold fungi, and can reliably remove an unpleasant odor. The coating film can impart an excellent antibacterial/antiviral function, an excellent antifungal function, and an excellent deodorizing function to all base materials (objects to be coated) without being limited to a particular object to be coated with the coating film, and by containing the large amount of silver ions, copper ions, and zinc ions, can maintain the antibacterial/antiviral function, the antifungal function, and the deodorizing function for a long period of time.

Since the coating film in which a content of the glass particles diffusively present in the coating film is 0.1 vol% or more to 30 vol% or less contains the glass particles in the content in the above range, the coating film has an excellent antibacterial/antiviral function, an excellent antifungal function, and an excellent deodorizing function, can reliably kill various bacteria, various viruses, and various mold fungi, and can reliably remove an unpleasant odor. The coating film can impart an excellent antibacterial/antiviral function, an excellent antifungal function, and an excellent deodorizing function to all base materials (objects to be coated) without being limited to a particular object to be coated with the coating film, and by containing the glass particles in the content in the above range, can maintain the antibacterial/antiviral function, the antifungal function, and the deodorizing function for a long period of time.

Since the coating film in which the content of the glass particles diffusively present in the coating film is 0.2 vol% or more to 10 vol% or less contains the glass particles in the content in the above range, the coating film has an excellent antibacterial/antiviral function, an excellent antifungal function, and an excellent deodorizing function, can reliably kill various bacteria, various viruses, and various mold fungi, and can reliably remove an unpleasant odor. The coating film can impart an excellent antibacterial/antiviral function, an excellent antifungal function, and an excellent deodorizing function to all base materials (objects to be coated) without being limited to a particular object to be coated with the coating film, and by containing the glass particles in the content in the above range, can maintain the antibacterial/antiviral function, the antifungal function, and the deodorizing function for a long period of time.

Since the coating film in which the glass particles have an average particle diameter D₅₀ of 5 µm or less uses the glass particles having the average particle diameter, it is possible to introduce a large amount of silver ions, copper ions, and zinc ions into the coating film, and make the coating film contain the large amount of silver ions, copper ions, and zinc ions. Since the coating film contains the large amount of silver ions, copper ions, and zinc ions, the coating film has an excellent antibacterial/antiviral function, an excellent antifungal function, and an excellent deodorizing function, can reliably kill various bacteria, various viruses, and various mold fungi, and can reliably remove an unpleasant odor. The coating film can impart an excellent antibacterial/antiviral function, an excellent antifungal function, and an excellent deodorizing function to all base materials (objects to be coated) without being limited to a particular object to be coated with the coating film, and by containing the large amount of silver ions, copper ions, and zinc ions, can maintain the antibacterial/antiviral function, the antifungal function, and the deodorizing function for a long period of time.

Since the coating film in which the glass particles have an average particle diameter D₅₀ of 3 µm or less uses the glass particles having the average particle diameter, it is possible to introduce a large amount of silver ions, copper ions, and zinc ions into the coating film, and make the coating film contain the large amount of silver ions, copper ions, and zinc ions. Since the coating film contains the large amount of silver ions, copper ions, and zinc ions, the coating film has an excellent antibacterial/antiviral function, an excellent antifungal function, and an excellent deodorizing function, can reliably kill various bacteria, various viruses, and various mold fungi, and can reliably remove an unpleasant odor. The coating film can impart an excellent antibacterial/antiviral function, an excellent antifungal function, and an excellent deodorizing function to all base materials (objects to be coated) without being limited to a particular object to be coated with the coating film, and by containing the large amount of silver ions, copper ions, and zinc ions, can maintain the antibacterial/antiviral function, the antifungal function, and the deodorizing function for a long period of time.

In the coating film in which after a surface of a predetermined base material is coated with a coating liquid for forming the coating film, the metal ions of the glass particles mixed into the coating liquid diffuse into the coating film, the metal ions diffusing into the coating film exhibit a high antibacterial/antiviral function, a high antifungal function, and a high deodorizing function. Therefore, the coating film has an excellent antibacterial/antiviral function, an excellent antifungal function, and an excellent deodorizing function, can reliably kill various bacteria, various viruses, and various mold fungi, and can reliably remove an unpleasant odor.

In the coating film in which the metal ions of the glass particles mixed into the coating liquid move to a surface of the coating film while diffusing inside the coating film, the metal ions moving to the surface of the coating film while diffusing inside the coating liquid exhibit a high antibacterial/antiviral function, a high antifungal function, and a high deodorizing function. Therefore, the coating film has an excellent antibacterial/antiviral function, an excellent antifungal function, and an excellent deodorizing function, can reliably kill various bacteria, various viruses, and various mold fungi, and can reliably remove an unpleasant odor.

In the coating film in which a stock solution of the coating liquid (starting material of the coating film) is a siloxane-based solution or a silica sol-based solution, and the glass particles are mixed into the siloxane-based solution or the silica sol-based solution, the siloxane-based solution or the silica sol-based solution having a porous molecular structure is used as the stock solution of the coating liquid (starting material of the coating film). Therefore, it is possible to mix a large amount of silver ions, copper ions, and zinc ions into the siloxane-based solution or the silica sol-based solution, to make the coating film formed from the siloxane-based solution or the silica sol-based solution contain the large amount of silver ions, copper ions, and zinc ions, and to diffuse the large amount of metal ions into the coating film. Since the large amount of silver ions, copper ions, and zinc ions diffuse into the coating film, the coating film has an excellent antibacterial/antiviral function, an excellent antifungal function, and an excellent deodorizing function, can reliably kill various bacteria, various viruses, and various mold fungi, and can reliably remove an unpleasant odor.

In the coating film that is a glass-based organic/inorganic hybrid coating film, the glass-based organic/inorganic hybrid coating film contains the large amount of silver ions, copper ions, and zinc ions, so that the coating film has an excellent antibacterial/antiviral function, an excellent antifungal function, and an excellent deodorizing function, can reliably kill various bacteria, various viruses, and various mold fungi, and can reliably remove an unpleasant odor. The coating film can impart an excellent antibacterial/antiviral function, an excellent antifungal function, and an excellent deodorizing function to all base materials (objects to be coated) without being limited to a particular object to be coated with the glass-based organic/inorganic hybrid coating film, and by containing the large amount of silver ions, copper ions, and zinc ions, can maintain the antibacterial/antiviral function, the antifungal function, and the deodorizing function for a long period of time. Since the glass-based organic/inorganic hybrid coating film has excellent strength and an excellent scratch-preventing function, the coating film can prevent scratches on the base material on which the glass-based organic/inorganic hybrid coating film is formed.

### Description of Embodiments

A coating film according to the present invention will be described in detail below with reference to the accompanying drawings. Fig. 1 is an enlarged cross-sectional image view illustrating an organic/inorganic hybrid coating film 10 formed on a surface 12 of a base material 11, and Figs. 2(a) to 2(c) are cross-sectional views for explaining, in time series, a mechanism in which the organic/inorganic hybrid coating film 10 is formed from a coating liquid 13 on the surface 12 (front surface, back surface) of the base material 11 coated (applied) with the coating liquid 13. Fig. 3 is a cross-sectional view schematically illustrating an example of a state immediately after the surface 12 (front surface, back surface) of the base material 11 is coated (applied) with the coating liquid 13, and Fig. 4 is a cross-sectional view schematically illustrating an example of a state after the organic/inorganic hybrid coating film 10 is deposited on the surface 12 of the base material 11.

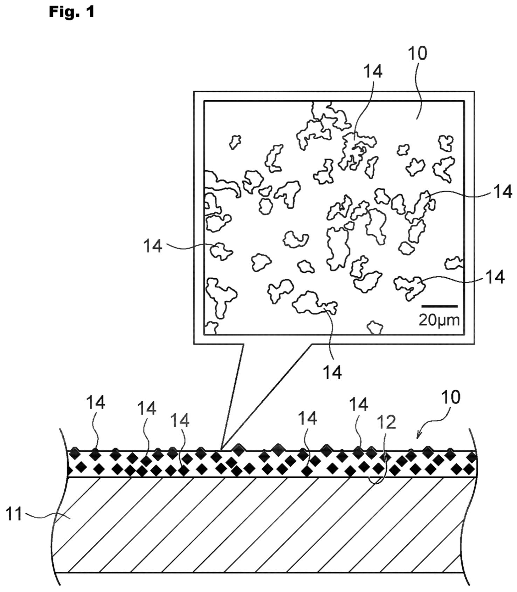

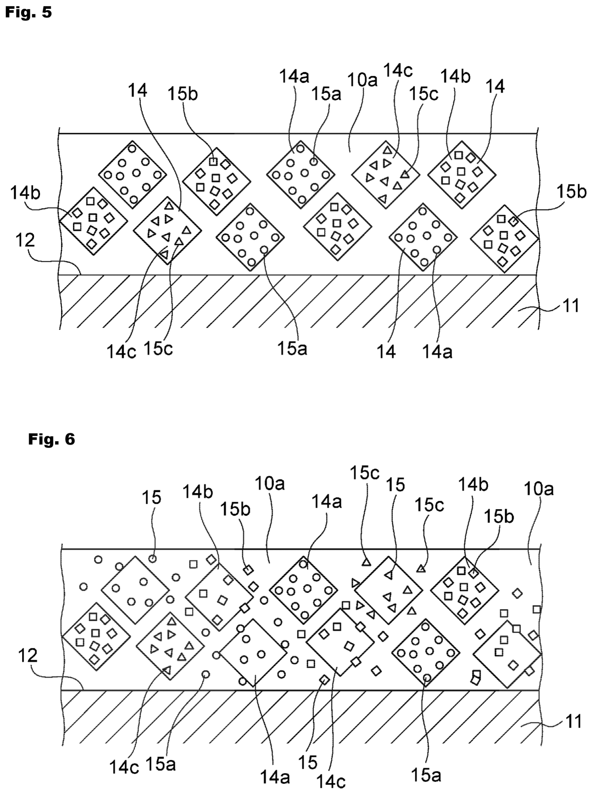

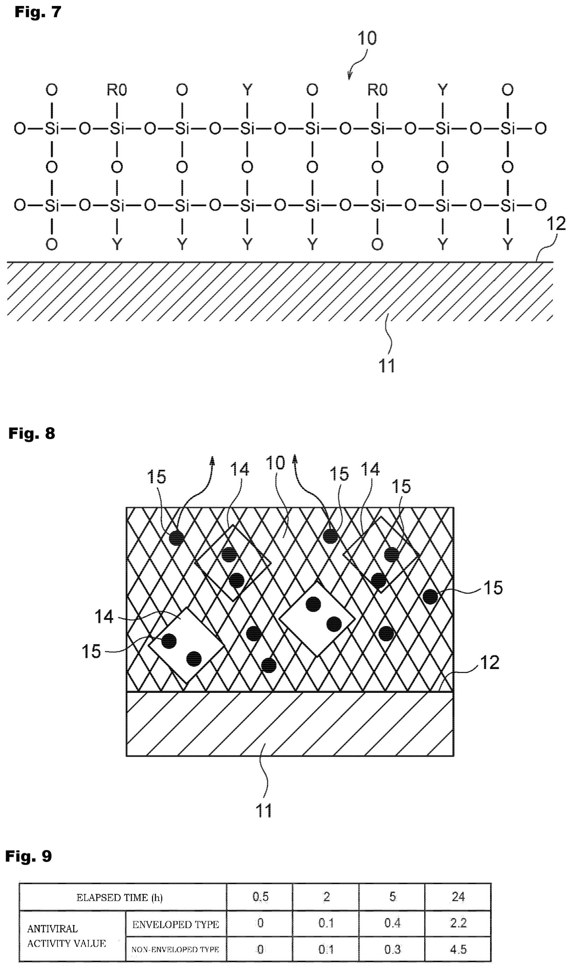

Fig. 5 is a cross-sectional view schematically illustrating another example of the state immediately after the surface 12 (front surface, back surface) of the base material 11 is coated (applied) with the coating liquid 13, and Fig. 6 is a cross-sectional view schematically illustrating another example of the state after the organic/inorganic hybrid coating film 10 is deposited on the surface 12 of the base material 11. Fig. 7 is an image view illustrating a structure example of the organic/inorganic hybrid coating film 10, and Fig. 8 is an image view illustrating an example of a metal ion state in the organic/inorganic hybrid coating film 10. In Figs. 1, 3, 4, 5, 6, and 8, glass particles 14 and metal ions 15 of silver ions 15a (Ag⁺), copper ions 15b (Cu²⁺), and zinc ions 15c (Zn²⁺) are illustrated as visible images, but the metal ions 15 cannot actually be viewed.

The organic/inorganic hybrid coating film 10 (coating film) is formed on the surface 12 (front surface, back surface) (contact surface) of the base material 11. The organic/inorganic hybrid coating film 10 is formed by coating (applying) the surface 12 of the base material 11 as an object to be coated therewith with the coating liquid 13 (organic and inorganic hybrid polymer). Examples of the base material 11 as the object to be coated with the coating liquid 13 (object where the organic/inorganic hybrid coating film 10 (coating film) is to be formed) include, but are not limited to, plastic (plastic molded products and products having plastic in their outermost layer), glass (glass molded products), metal (metal molded products), rubber (rubber molded products), leather (leather molded products), wood (wood molded products), paper (paper molded products, woven or knitted fabric using fibers (woven or knitted fabric molded products), and nonwoven fabric (nonwoven fabric molded products).

Examples of the plastic include known thermoplastic resins such as polyethylene, polypropylene, polystyrene, polyethylene terephthalate, polybutylene terephthalate, polycarbonate, polyamide (nylon), vinyl chloride resin, acrylic resin, silicone resin, fluororesin, polyimide resin, and polysulfone resin, and thermosetting resins such as epoxy resin, melamine resin, phenol resin, and unsaturated polyester resin. Examples of the metal include iron, aluminum, duralumin, stainless steel, copper, gold, silver, titanium, nickel, and alloys.

Examples of the respective molded products include medical garments (masks, white coats, protective clothing, gloves, etc.), medical bedding (coverlets, pillowcases, curtains, patient amenities, etc.), medical instruments (scissors, scalpels, other instruments, etc.), in-hospital facilities (handrails, doorknobs, walls, floors, elevators, escalators, etc.), transportation means (trains, buses, aircraft, ships, vehicles, etc.), garments (underwear, T-shirts, socks, sportswear, diapers, etc.), articles for pets (toilets for pets, cages for pets, etc.), sanitary articles (kitchen utensils, toilet articles, bath articles, washstands, etc.), and articles for food (food trays, kitchen utensils, tableware, etc.), but in addition to these, include all molded products to be an antibacterial/antiviral target, an antifungal target, and a deodorizing target.

A starting material (coating stock solution) of the coating liquid 13 (organic and inorganic hybrid polymer) is formed from a liquid organosilicon material-based solution (silicon material-based solution) containing at least one of a siloxane (siloxane-based solution), a polysilazane (inorganic polysilazane, organic polysilazane), and a silica sol (silica sol-based solution), an alkyl silicate condensate, an inert organic solvent, and the glass particles 14 described later. As an example of the siloxane, an organopolysiloxane in which silicon atoms (Si) having an organic group are connected by a siloxane bond (≡Si-O-Si≡) is used. The organopolysiloxane has a number-average molecular weight in a range of 3,000 to 150,000 g/mol.

For the coating liquid 13 (organic and inorganic hybrid polymer), either the siloxane or the polysilazane may be used, or a liquid mixture obtained by mixing both of them may be used. The organosilicon material, the alkyl silicate condensate, and the inert organic solvent are mixed and stirred at a predetermined blending ratio, and the glass particles 14 are mixed into the obtained liquid mixture, thereby producing the coating liquid 13. In the coating liquid 13, the organosilicon material composed of at least one of the siloxane and the polysilazane, and the alkyl silicate condensate are diluted with the inert organic solvent.

For the inorganic polysilazane, a Si-N-based perhydropolysilazane (perhydropolysilazane) is used. As the polysilazane, a Si-C-N-based organopolysilazane and a Si-C-based polycarbosilane can be used, and SiC-O-based, Si-B-C-N-based, and Si-Ti-N-based polysilazanes can also be used.

As the organic polysilazane, a modified polysilazane such as methylpolysilazane, dimethylpolysilazane, phenylpolysilazane, or vinylpolysilazane can also be used. In addition, it is also possible to use a crosslinked polysilazane chemically crosslinked by a compound that chemically reacts with the polysilazane to generate a crosslinked structure, such as a hydrocarbon compound having a reactive group such as a hydroxyl group, a vinyl group, an amino group, and a silyl group, a cyclic saturated hydrocarbon compound, a cyclic unsaturated hydrocarbon compound, a saturated heterocyclic compound, an unsaturated heterocyclic compound, and a silicone compound.

In addition, it is also possible to use a polyborosilazane, an inorganic silazane high polymer, a modified polysilazane, a copolymerized silazane, a low-temperature ceramized polysilazane obtained by adding or providing a catalytic compound for promoting ceramization to the polysilazane, a silicon-alkoxide-added polysilazane, a glycidol-added polysilazane, an acetylacetonato complex-added polysilazane, a metal carboxylate-added polysilazane, or a polysilazane composition obtained by adding amines and/or acids to various polysilazanes described above or modified products thereof.

As the polysilazane, a single type of polysilazane, a mixture of two or more types of polysilazanes selected from various types of polysilazanes, or a polysilazane copolymer having two or more types of polysilazane structures can be used, and at least one hydrogen atom directly bonding to a silicon atom is contained in one molecule. The polysilazane that forms the coating liquid 13 has a weight-average molecular weight in a range of 100 to 100 million, preferably 1,000 to 1 million, and more preferably 2,000 to 500,000 from the viewpoint of solubility in a solvent and workability at the time of application. When the weight-average molecular weight is 100 or more, volatility is low, and the film quality of a coating film may be deteriorated due to volatilization of the polysilazane itself during a solvent volatilization and curing step.

The inorganic polysilazane is represented by a general formula (Chemical Formula 1).

### [Chemical Formula 1]

Examples of the inorganic polysilazane include a perhydropolysilazane including a straight-chain structure having a structural unit, having a molecular weight of 690 to 2,000, having 3 to 10 SiH₃ groups in one molecule, and having an element ratio of Si: 59 to 61 wt%, N: 31 to 34 wt%, and H: 6.5 to 7.5 wt% by chemical analysis, and a perhydropolysilazane having a polystyrene-converted average molecular weight in a range of 3,000 to 20,000.

The perhydropolysilazane includes a chain part and a cyclic part in the molecule, and is represented by the following chemical formula (Chemical Formula 2).

### [Chemical Formula 2]

An example of the perhydropolysilazane structure is represented by the following chemical formula (Chemical Formula 3).

### [Chemical Formula 3]

Another example of a perhydropolysilazane compound group is a polymer represented by the following general formula (Chemical Formula 4), having a Si-N bond and functional groups (R¹ to R³), and formed of a -(SiR₁R₂-NR₃)-unit, and is an organic polymer formed of an organic functional group such as an alkyl group in which at least either of functional groups R₁ and R₂ directly bonding to Si has carbon (C).

### [Chemical Formula 4]

The perhydropolysilazane has a methyl group (CH₃) content of 50% or more, the methyl group (CH₃) being one of functional groups (R¹ to R³) of an organic compound having a structure in which a carbon atom is substituted with three hydrogen atoms. In addition, the perhydropolysilazane may be not only a polymer formed of one type of -(SiR₁R₂-NR₃)- unit but also a polymer formed of a plurality of types of -(SiR₁R₂-NR₃)- units having different compositions of functional groups (R₁ to R₃). Furthermore, the perhydropolysilazane may be a polymer having a chain, cyclic, or crosslinked structure, or may be a polymer having these structures in a composite manner. R¹, R², and R³ represent a hydrogen atom, an alkyl group, an alkenyl group, a cycloalkyl group, an aryl group, or a group in which a group directly bonding to silicon other than these groups is carbon, an alkylsilyl group, an alkylamino group, or an alkoxy group. However, at least one of R¹, R², and R³ is a hydrogen atom.

A perhydropolysilazane (A) as one example is a polymer having a -(SiH(CH₃)-NH)- unit, a -(Si(CH₃)2-NH)- unit, and a -(SiR¹(CH₃)-NR₃)- unit represented by the following general formula (Chemical Formula 5). A functional group R1 in the -(SiR¹(CH₃)-NR³)- unit is H or CH₃, and a functional group R3 directly bonding to N is an organic functional group that promotes a reaction. By containing the perhydropolysilazane (A) in the coating liquid 13, a reaction after coating the surface 12 of the article 11 with the coating liquid 13 is promoted, and the organic/inorganic hybrid coating film 13 can be formed on the surface 12 of the article 11 at an early stage.

### [Chemical Formula 5]

A perhydropolysilazane (B) as another example is a polymer having a -(SiH(CH₃)-NH)- unit and a -(SiR¹(CH₃)-NH) - unit represented by the following general formula (Chemical Formula 6), and a functional group R¹ of the -(SiR¹(CH₃)-NH)- unit is an organic functional group that achieves high heat resistance. By containing the perhydropolysilazane (B) in the coating liquid 13, the heat resistance of the organic/inorganic hybrid coating film 13 coating the surface 12 of the article 11 can be enhanced.

### [Chemical Formula 6]

The perhydropolysilazane contained in the coating liquid 14 may be a mixture of a plurality of types of perhydropolysilazanes having different polymer structures. For example, a perhydropolysilazane obtained by mixing the perhydropolysilazane (A) and the perhydropolysilazane (B) may be used. According to a mixing experiment of the perhydropolysilazane (A) and the perhydropolysilazane (B), it has been confirmed that with a blending ratio of 50 mass% of the perhydropolysilazane (A) to 50 mass% of the perhydropolysilazane (B), a rust prevention property equivalent to or more than that of the perhydropolysilazane (A) alone is exhibited, and a curing time (generation time of the organic/inorganic hybrid coating film 13) is shortened as compared with the perhydropolysilazane (B) alone.

An organopolysilazane has a hydrogen atom at R¹ and R² and an organic group at R³ in the above general formula (Chemical Formula 4). There are a polysilazane having a repeating unit of -(R²SiHNH)- and a cyclic structure with a polymerization degree of 3 to 5, a polysilazane having a chain structure and a cyclic structure simultaneously in the molecule represented by the chemical formula of (R³SiHNH)ₓ[(R²SiH)_{1.5}N]₁₋ₓ(0.4<X<1), a polysilazane having a hydrogen atom at R¹, and an organic group at R² and R³ in the above general formula (Chemical Formula 4), and a polysilazane having an organic group at R¹ and R², and a hydrogen atom at R³, and having a repeating unit of - (R¹R²SiNR³)- and a cyclic structure with a polymerization degree of 3 to 5 mainly.

For example, an organopolysilazane having a crosslinked structure other than the above general formula (Chemical Formula 4) in the molecule is represented by the following general formula (Chemical Formula 7).

### [Chemical Formula 7]

In addition, for example, a polysilazane having a crosslinked structure obtained by ammonia decomposition of R¹SiX₃ (X: halogen), and a polysilazane having a structure obtained by co-ammonia decomposition of R¹Si(NH)ₓ, R¹SiX₃ and R²₂SiX₂ are represented by the following general formula (Chemical Formula 8).

### [Chemical Formula 8]

### (m, n: positive integer)

Examples of the organopolysiloxane include a polymer having an average unit formula (A):
(R¹₃SiO_{1/2})ₐ(R¹₂SiO_{2/2})_{b}(R¹SiO_{3/2})_{c}(SiO_{4/2})_{d}. In the average unit formula (A), R¹ is an independent monovalent organic group, and is preferably a monovalent ethylenically unsaturated group, a monovalent hydrocarbon group (excluding an ethylenically unsaturated group), or a monovalent substituted hydrocarbon group (excluding an ethylenically unsaturated group). The carbon number of R¹ is preferably 1 or more to 8 or less, and more preferably 1 or more to 6 or less. The monovalent substituted hydrocarbon group has a hydrocarbon group as a basic skeleton, and contains, for example, at least one type of functional group selected from the group consisting of a hydroxy group, a mercapto group, an amino group, an isothiocyanate group, a nitro group, and a carbonyl group. R¹ is preferably the monovalent ethylenically unsaturated group or the monovalent hydrocarbon group, and more preferably the monovalent ethylenically unsaturated group.

Examples of the monovalent ethylenically unsaturated group include an alkenyl group such as a vinyl group, an allyl group, a butenyl group, a pentenyl group, and a hexenyl group. The carbon number of the alkenyl group is preferably 2 or more to 8 or less, more preferably 2 or more to 6 or less, and still more preferably 2 or more to 3 or less. As the monovalent ethylenically unsaturated group, there is also a (meth)acryloyloxyalkyl group, that is, a group represented by a formula (B): -R¹²-OC(=O)-CR¹¹=CH₂. Specifically, there are an acryloyloxypropyl group and a methacryloyloxypropyl group. In the formula (B), R¹¹ is a hydrogen atom or a methyl group, and R¹² is an alkanediyl group, preferably an alkanediyl group having 1 or more to 5 or less carbon atoms. It is to be noted that (meth)acryl is used as a generic term for acryl and methacryl, and (meth)acryloyl is used as a generic term for acryloyl and methacryloyl.

As the monovalent ethylenically unsaturated group, the alkenyl group is preferable, the vinyl group and the allyl group are preferable, and the vinyl group is more preferable. Examples of the monovalent hydrocarbon group include an alkyl group such as a methyl group, an ethyl group, a propyl group, a butyl group, a pentyl group, a hexyl group, and a heptyl group; an aryl group such as a phenyl group, a tolyl group, and a xylyl group; and an aralkyl group such as a benzyl group and a phenethyl group. The carbon number of the monovalent hydrocarbon group is preferably 1 or more to 8 or less, more preferably 1 or more to 5 or less, and still more preferably 1 or more to 3 or less.

Examples of the monovalent substituted hydrocarbon group include a 3-mercaptopropyl group (-(CH₂)₃-SH) and a 3-aminopropyl group (-(CH₂)₃-NH₂). From the viewpoint of micronization, R¹ is preferably independently an alkyl group or an alkenyl group, more preferably independently an alkyl group, a vinyl group, or an allyl group having 1 or more to 3 or less carbon atoms, and still more preferably a methyl group or a vinyl group.

In one molecule of the organopolysiloxane having the average unit formula (A), at least a part of R¹ is a group containing a functional group (L) such as a monovalent ethylenically unsaturated group, an aryl group, or an aralkyl group, preferably a monovalent ethylenically unsaturated group, and more preferably an alkenyl group. The total proportion of the monovalent ethylenically unsaturated group, the aryl group, or the aralkyl group is preferably 50 mol% or more, more preferably 60 mol% or more, still more preferably 70 mol% or more, yet more preferably 80 mol% or more, and particularly preferably 90 mol% or more, based on the total R¹ in one molecule of the organopolysiloxane. The monovalent ethylenically unsaturated group, the aryl group, or the aralkyl group is a hydrophobic group containing a nonionic functional group capable of being coordinated to a metal ion.

In the average unit formula (A), a, b, c, and d represent average values of mole fractions of structural units (R¹₃SiO_{1/2}), (R¹₂SiO_{2/2}), (R¹SiO_{3/2}), and (SiO_{4/2}), respectively. The sum of a, b, c, and d, which is the sum of the mole fractions of the respective structural units, is 1. a is the mole fraction of a siloxane unit represented by R¹₃SiO_{1/2} (M unit). a is 0 or more to 0.5 or less, preferably 0.4 or less, more preferably 0.3 or less, still more preferably 0.2 or less, and particularly preferably 0.1 or less.

b is the mole fraction of a siloxane unit represented by R¹₂SiO_{2/2} (D unit). b is 0 or more to 0.5 or less, preferably 0.4 or less, more preferably 0.3 or less, still more preferably 0.2 or less, and particularly preferably 0.1 or less. c is the mole fraction of a siloxane unit represented by R¹SiO_{3/2} (T unit). c is 0.3 or more to 1 or less, preferably 0.4 or more, 0.5 or more, or 0.6 or more, more preferably 0.7 or more, still more preferably 0.8 or more, and particularly preferably 0.9 or more.

d is the mole fraction of a siloxane unit represented by SiO_{4/2} (Q unit). d is 0 or more to 0.7 or less, preferably 0.6 or less, 0.5 or less, or 0.4 or less, more preferably 0.3 or less, still more preferably 0.2 or less, and particularly preferably 0.1 or less. The sum of c and d representing the sum of branched structural units is preferably 0.6 or more, more preferably 0.7 or more, still more preferably 0.8 or more, and particularly preferably 0.9 or more.

In a case where the organopolysiloxane has the structural unit (R¹₃SiO_{1/2}) in the average unit formula (A), the organopolysiloxane may have only the single type of structural unit, or may have two or more types. The same applies to the structural units (R¹₂SiO_{2/2}) and (R¹SiO_{3/2}) in the average unit formula (A). The organopolysiloxane may have a structural unit in which at least a part of R¹ in each of the above structural units is substituted with R²O. R² in the average unit formula (A) is a hydrogen atom or an alkyl group. R²O means a hydroxy group or an alkoxy group bonding to a silicon atom contained in the organopolysiloxane skeleton. Examples of the alkyl group include a methyl group, an ethyl group, and a propyl group. The carbon number of the alkyl group is preferably 1 or more to 3 or less.

The amount of structural units in which at least a part of R¹ in each of the above structural units is substituted with R²O is preferably 0 or more to 0.10 or less, more preferably 0 or more to 0.05 or less, and still more preferably 0 or more to 0.03 or less, based on 1 as the sum of a, b, c, and d, which is the sum of the mole fractions of the structural units. The alkoxy group in the structural unit is, for example, an alkoxy group that is a hydrolyzable group contained in an alkoxysilane described later and remains in the molecule without hydrolysis/polycondensation. The hydroxy group in this structural unit is, for example, a hydroxy group in which the alkoxy group remains in the molecule without polycondensation after hydrolysis.

The organopolysiloxane is preferably a silsesquioxane. The silsesquioxane is an organopolysiloxane in which a main chain skeleton is composed of a Si-O bond, a (R¹SiO_{3/2}) unit is contained as a main structural unit, and c is 0.7 or more. Examples of the silsesquioxane structure include a random structure, a complete basket structure, an incomplete basket structure, and a ladder structure, and among these, a silsesquioxane having a random structure is preferable from the viewpoint of ease of production.

Examples of an alkoxysilane that forms the structural unit (R¹₃SiO_{1/2}) include a compound represented by R¹₃Si(OR²). Specific examples thereof include methoxydimethylvinylsilane, ethoxydimethylvinylsilane, methoxydimethylphenylsilane, and ethoxydimethylphenylsilane; and methoxytrimethylsilane and ethoxytrimethylsilane.

Examples of an alkoxysilane that forms the structural unit (R¹₂SiO_{2/2}) include a compound represented by R¹₂Si(OR²)₂. Specific examples thereof include dimethoxymethylvinylsilane, diethoxymethylvinylsilane, and dimethoxybenzylmethylsilane; and dimethoxydimethylsilane, dimethoxydiethylsilane, diethoxydimethylsilane, diethoxydiethylsilane, dipropoxydimethylsilane, and dipropoxydiethylsilane.

Examples of an alkoxysilane that forms the structural unit (R¹SiO_{3/2}) include a compound represented by R¹Si(OR²)₃. Specific examples thereof include trimethoxyvinylsilane, triethoxyvinylsilane, trimethoxyallylsilane, triethoxyallylsilane, (3-(meth)acryloyloxypropyl) trimethoxysilane, and (3-(meth)acryloyloxypropyl) triethoxysilane; and methyltrimethoxysilane, methyltriethoxysilane, methyltripropoxysilane, ethyltrimethoxysilane, ethyltriethoxysilane, propyltrimethoxysilane, propyltriethoxysilane, and butyltrimethoxysilane. Examples of an alkoxysilane that forms the structural unit (SiO_{4/2}) include a compound represented by Si(OR²)₄. Specific examples thereof include tetramethoxysilane, tetraethoxysilane, and tetrapropoxysilane.

The siloxane contained in the coating liquid 13 may be any one type among a chain siloxane having a chain skeleton and a cyclic siloxane having a cyclic skeleton, or a liquid mixture obtained by mixing two or more types thereof. As the cyclic siloxane, one type selected from hexamethylcyclotrisiloxane (C₆H₁₈O₃Si₄), octamethylcyclotetrasiloxane (C₆H₂₄O₄Si₄), and decamethylcyclopentasiloxane (C₁₀H₃₀O₅Si₅), or a liquid mixture obtained by mixing two or more types thereof can be used. The organic polysilazane has a number-average molecular weight in a range of 3,000 to 150,000 g/mol.

The alkyl silicate condensate is one type selected from tetramethyl orthosilicate, tetraethyl orthosilicate, tetra-n-propyl orthosilicate, tetra-i-propyl orthosilicate, tetra-n-butyl orthosilicate, tetra-sec-butyl orthosilicate, methyl polysilicate, and ethyl polysilicate, or a condensate (liquid mixture) obtained by mixing two or more types thereof. The inert organic solvent is inert to the organic polysilazane, the siloxane, and the alkyl silicate condensate, and is selected from among dibutyl ether, turpentine oil, benzene, toluene, xylene, propylene glycol monomethyl ether acetate.

In the coating liquid 13, since the number-average molecular weight of the organopolysiloxane and the number-average molecular weight of the organic polysilazane are in the above ranges, the coating liquid 13 containing the organopolysiloxane and/or the organic polysilazane can maintain predetermined viscosity, and the initial organic/inorganic hybrid coating film 10 can be formed from the coating liquid 13. The coating liquid 13 coats the surface 12 of the base material 11 (molded product) as the object to be coated while maintaining the predetermined viscosity. Thus, even when the surface 12 of the base material 11 in which fine holes or meshes are formed is coated, the coating liquid 13 does not penetrate into the base material 11, and the organic/inorganic hybrid coating film 10 having a substantially uniform film thickness can be formed on the surface 12 of the base material 11.

In the coating liquid 13, the blending ratio of the organosilicon material (organopolysiloxane and/or organic polysilazane) with respect to the total mass of the coating liquid 13 is in a range of 30 to 60 mass%, the blending ratio of the alkyl silicate condensate with respect to the total mass of the coating liquid 13 is in a range of 10 to 15 mass%, and the blending ratio of the inert organic solvent with respect to the total mass of the coating liquid 13 is in a range of 30 to 60 mass%. When the blending ratio of the organosilicon material (organopolysiloxane and/or organic polysilazane) is less than 30 mass%, the content of the organosilicon material is small, and the organic/inorganic hybrid coating film 10 having a predetermined film thickness and excellent flexibility, impact resistance, and corrosion resistance cannot be formed on the surface 12 of the base material 11 (molded product). When the blending ratio of the organosilicon material (organopolysiloxane and/or organic polysilazane) exceeds 60 mass%, the viscosity of the coating liquid 13 increases more than necessary, and the film thickness of the organic/inorganic hybrid coating film 10 increases more than necessary. Since the blending ratio of the organosilicon material (organopolysiloxane and/or organic polysilazane) with respect to the total mass of the coating liquid 13 is in the above range, the organic/inorganic hybrid coating film 10 having an appropriate film thickness and excellent flexibility, impact resistance, and corrosion resistance can be formed on the surface 12 of the base material 11.

When the blending ratio of the alkyl silicate condensate is less than 10 mass%, the action as a crosslinking agent of the alkyl silicate condensate is weak, and a sufficient crosslinked structure is not formed in the organic/inorganic hybrid coating film 10. When the blending ratio of the alkyl silicate condensate exceeds 15 mass%, an unnecessary crosslinked structure is formed in the organic/inorganic hybrid coating film 10, and the flexibility of the organic/inorganic hybrid coating film 10 increases more than necessary. Since the blending ratio of the alkyl silicate condensate with respect to the total mass of the coating liquid 13 is in the above range, the organic/inorganic hybrid coating film 10 having an appropriate crosslinked structure and appropriate flexibility can be formed using the coating liquid 13.

When the blending ratio of the inert organic solvent is less than 30 mass%, the viscosity of the coating liquid 13 increases, and the film thickness of the organic/inorganic hybrid coating film 10 formed from the coating liquid 13 increases more than necessary. When the blending ratio of the inert organic solvent exceeds 60 mass%, the viscosity of the coating liquid 13 decreases more than necessary, and the organic/inorganic hybrid coating film 10 having a predetermined film thickness and excellent flexibility, impact resistance, and corrosion resistance cannot be formed on the surface 12 of the base material 11 (molded product). Since the blending ratio of the inert organic solvent with respect to the total mass of the coating liquid 13 is in the above range, the organic/inorganic hybrid coating film 10 having appropriate viscosity and excellent flexibility, impact resistance, and corrosion resistance can be formed on the surface 12 of the base material 11 using the coating liquid 13.

Since the coating liquid 13 contains the organosilicon material (organopolysiloxane and/or organic polysilazane) in the range of 30 to 60 mass% and the alkyl silicate condensate in the range of 10 to 15 mass% with respect to the total mass, the formation (deposition) speed of the organic/inorganic hybrid coating film 10 formed from the coating liquid 13 can be appropriately controlled. Specifically, since the hydrolysis of the alkyl silicate condensate proceeds faster than the condensation of the organopolysiloxane and/or the organic polysilazane, a part of water (H₂O) is consumed first in the hydrolysis of the alkyl silicate condensate, so that the progress of the condensation reaction of the organopolysiloxane and/or the organic polysilazane can be delayed, and the formation (deposition) speed of the organic/inorganic hybrid coating film 10 can be controlled. In addition, since the hydrolysis of the alkyl silicate condensate occurs first, it is possible to reliably form a crosslinked structure in the organic/inorganic hybrid coating film 10 to impart flexibility.

In addition, since the organic solvent is selected from any one of dibutyl ether, turpentine oil, benzene, and toluene inert to the organic polysilazane, the siloxane, and the alkyl silicate condensate, particularly the condensation reaction of the organopolysiloxane and/or the organic polysilazane does not rapidly proceed, and the formation (deposition) speed of the organic/inorganic hybrid coating film 10 can be appropriately controlled. The coating liquid 13 capable of controlling the formation (deposition) speed of the organic/inorganic hybrid coating film 10 can facilitate a coating work of the surface 12 of the base material 11 (molded product).

The glass particles 14 mixed into the coating liquid 13 are conductive glass containing the metal ions 15 of at least one type among the silver ions 15a (Ag⁺), the copper ions 15b (Cu²⁺), and the zinc ions 15c (Zn²⁺). The glass particles 14 (conductive glass) containing the metal ions 15 of the silver ions 15a, the copper ions 15b, and the zinc ions 15c exhibit ion conductivity. The glass particles 14 include glass particles (not illustrated) based on at least one type among vanadium oxide (V₂O₅) (electron conductive glass), tungsten oxide (WO₃) (electron conductive glass), and molybdenum oxide (MoO₃) (electron conductive glass), and phosphorus oxide (P₂O₅) (electron conductive glass).

An example of the glass particles 14 is conductive glass (electron conductive glass) containing the silver ions 15a (Ag⁺) among the silver ions 15a (Ag⁺), the copper ions 15b (Cu²⁺), and the zinc ions 15c (Zn²⁺) and containing at least either of the copper ions 15b (Cu²⁺) and the zinc ions 15c (Zn²⁺). Another example of the glass particles 14 is conductive glass (electron conductive glass) formed of the glass particles 14 (conductive glass) containing the silver ions 15a (Ag⁺) among the silver ions 15a (Ag⁺), the copper ions 15b (Cu²⁺), and the zinc ions 15c (Zn²⁺) and containing at least either of the copper ions 15b (Cu²⁺) and the zinc ions 15c (Zn²⁺), and glass based on at least one type among vanadium oxide (V₂O₅), tungsten oxide (WO₃), and molybdenum oxide (MoO₃), and phosphorus oxide (P₂O₅).

Another example of the glass particles 14 is conductive glass (electron conductive glass) formed of the glass particles 14 (conductive glass) containing the silver ions 15a (Ag⁺) among the silver ions 15a (Ag⁺), the copper ions 15b (Cu²⁺), and the zinc ions 15c (Zn²⁺) and containing at least either of the copper ions 15b (Cu²⁺) and the zinc ions 15c (Zn²⁺), and glass based on vanadium oxide (V₂O₅) and phosphorus oxide (P₂O₅). Another example of the glass particles 14 is conductive glass (electron conductive glass) formed of the glass particles 14 (conductive glass) containing the silver ions 15a (Ag⁺) among the silver ions 15a (Ag⁺), the copper ions 15b (Cu²⁺), and the zinc ions 15c (Zn²⁺) and containing at least either of the copper ions 15b (Cu²⁺) and the zinc ions 15c (Zn²⁺), and glass based on tungsten oxide (WO₃) and phosphorus oxide (P₂O₅). Another example of the glass particles 14 is conductive glass (electron conductive glass) formed of the glass particles 14 (conductive glass) containing the silver ions 15a (Ag⁺) among the silver ions 15a (Ag⁺), the copper ions 15b (Cu²⁺), and the zinc ions 15c (Zn²⁺) and containing at least either of the copper ions 15b (Cu²⁺) and the zinc ions 15c (Zn²⁺), and glass based on molybdenum oxide (MoO₃) and phosphorus oxide (P₂O₅).

Another example of the glass particles 14 is conductive glass (electron conductive glass) containing only the silver ions 15a (Ag⁺), conductive glass containing only the copper ions 15b (Cu²⁺), and conductive glass containing only the zinc ions 15c (Zn²⁺). Another example of the glass particles 14 is the conductive glass (electron conductive glass) containing only the silver ions (Ag⁺) 15a. Another example of the glass particles 14 is conductive glass (electron conductive glass) formed of at least the glass particles 14 (conductive glass) containing only the silver ions 15a (Ag⁺) among the conductive glass containing only the silver ions 15a (Ag⁺), the conductive glass containing only the copper ions 15b (Cu²⁺), and the conductive glass containing only the zinc ions 15c (Zn²⁺), and the glass based on at least one type among vanadium oxide (V₂O₅), tungsten oxide (WO₃), and molybdenum oxide (MoO₃), and phosphorus oxide (P₂O₅).

Another example of the glass particles 14 is conductive glass (electron conductive glass) formed of at least the glass particles 14 (conductive glass) containing only the silver ions 15a (Ag⁺) among the conductive glass containing only the silver ions 15a (Ag⁺), the conductive glass containing only the copper ions 15b (Cu²⁺), and the conductive glass containing only the zinc ions 15c (Zn²⁺), and the glass based on vanadium oxide (V₂O₅) and phosphorus oxide (P₂O₅). Another example of the glass particles 14 is conductive glass (electron conductive glass) formed of at least the glass particles 14 (conductive glass) containing only the silver ions 15a (Ag⁺) among the conductive glass containing only the silver ions 15a (Ag⁺), the conductive glass containing only the copper ions 15b (Cu²⁺), and the conductive glass containing only the zinc ions 15c (Zn²⁺), and the glass based on tungsten oxide (WO₃) and phosphorus oxide (P₂O₅). Another example of the glass particles 14 is conductive glass (electron conductive glass) formed of at least the glass particles 14 (conductive glass) containing only the silver ions 15a (Ag⁺) among the conductive glass containing only the silver ions 15a (Ag⁺), the conductive glass containing only the copper ions 15b (Cu²⁺), and the conductive glass containing only the zinc ions 15c (Zn²⁺), and the glass based on molybdenum oxide (MoO₃) and phosphorus oxide (P₂O₅). Another example of the glass particles 14 is vanadium oxide (V₂O₅)-phosphorus oxide (P₂O₅)-based conductive glass (electron conductive glass) containing the silver ions 15a (Ag⁺). The glass particles 14 may contain barium oxide (BaO).

Since the metal ions 15 of the silver ions 15a (Ag⁺), the copper ions 15b (Cu²⁺), and the zinc ions 15c (Zn²⁺) generated by being separated from oxygen are in an unstable state (positively charged), the metal ions 15 are taken into cells of microorganisms (viruses, bacteria, fungi, algae, etc.) in an attempt to bond to oxygen of the microorganisms and germs, the taken silver ions 15a, copper ions 15b, and zinc ions 15c bond to protein and the like to inhibit their functions and disable cell division and the like, active oxygen species are generated by the protein functional impairment, and microbial cells are killed.

The surface 12 of the base material 11 (molded product) as the object to be coated is coated or sprayed with the coating liquid 13 (organic and inorganic hybrid polymer), whereby the coating liquid 13 chemically reacts with water to form (deposit) the single-layered or multilayered ultrathin organic/inorganic hybrid coating film 10. The organic/inorganic hybrid coating film 10 is formed as a coat having an average film thickness in a range of 0.2 µm or more to 20 µm or less, preferably in a range of 0.5 µm or more to 20 µm or less.

A method for coating the surface 12 (contact surface) of the base material 11 (molded product) with the coating liquid 13 is not particularly limited, and coating is performed by a coating method suitable for the shape of the base material 11 as the object to be coated (coated). For example, coating is performed by spraying method, dipping method, brush coating method, roll coating method, gravure coating method, flexographic method, inkjet method, or the like. A coating amount (application amount) of the coating liquid 13 is not particularly limited, and the coating amount is determined according to surface performance required for the base material 11 (molded product) as the object to be coated. In general, the coating amount is 0.1 to 20 g/m² in terms of solid content. When the coating amount is less than 0.1 g/m², the organic/inorganic hybrid coating film 10 having desired characteristics is not formed. On the other hand, when the coating amount exceeds 20 g/m², the film thickness of the organic/inorganic hybrid coating film 10 increases more than necessary, and the flexibility of the organic/inorganic hybrid coating film 10 is lost.

As a pretreatment step preceding a coating step of the coating liquid 13, water (H₂O) such as purified water may be sprayed on the surface 12 of the base material 11 (molded product) to adhere water to the surface 12 of the base material 11. In this way, the chemical reaction between the water adhered to the surface 12 of the base material 11 and the components contained in the coating liquid 13 is promoted, the organic/inorganic hybrid coating film 10 can be quickly generated on the surface 12 of the base material 11, and the organic/inorganic hybrid coating film 10 can be firmly formed on the surface 12 of the base material 11.

In addition, as a pretreatment step preceding the coating step of the coating liquid 13, the surface 12 of the base material 11 (molded product) can be coated with, as a primer, a coating liquid containing an inorganic polysilazane as a main component. For example, in a case where coating with the coating liquid 13 is performed after coating with an inorganic polysilazane solution (1 wt% solution), the rust prevention property (durability) of the organic/inorganic hybrid coating film 10 is improved as compared with a case where only the coating with the coating liquid 13 is performed.

A mechanism in which the organic/inorganic hybrid coating film 10 is formed on the surface 12 of the base material 11 will be described as follows. In the formation (deposition) of the organic/inorganic hybrid coating film 10, after the surface 12 of the base material 11 is coated with the coating liquid 13 by the coating step, the surface 12 of the base material 11 is left at room temperature (normal temperature) for a predetermined time (24 hours or more) without being heated. Alternatively, after the surface 12 of the base material 11 is coated with the coating liquid 13, the surface 12 of the base material 11 is left at room temperature (normal temperature) for a predetermined time (24 hours or more) while being irradiated with ultraviolet rays. Alternatively, after the surface 12 of the base material 11 is coated with the coating liquid 13, the surface 12 of the base material 11 is irradiated with infrared rays to be heated to a temperature of less than 400°C and left for a predetermined time (24 hours or more) while being irradiated with ultraviolet rays.

A small amount of water (water droplets) adheres to the surface 12 of the base material 11 due to dew condensation or moisture in the air (including the case of spraying water (H₂O)). When the surface 12 of the base material 11 is coated with the coating liquid 13 in a thin film shape by the coating step, (R¹₃SiO_{1/2})ₐ(R¹₂SiO_{2/2})_{b}(R¹SiO_{3/2})_{c}(SiO_{4/2})_{d} constituting the organopolysiloxane contained in the coating liquid 13 chemically reacts with water (H₂0) in the air, or a -(SiR¹R²-NR³)- unit component constituting the organic polysilazane and/or a -(SiR¹R²-NR³)- unit component constituting the siloxane contained in the coating liquid 13 chemically reacts with water (H₂0) in the air, so that an organic composite structure in which an organic functional group bonds as a side chain to a part of a main chain by a siloxane bond (Si-O-Si) is generated on the surface 12 of the base material 11. Trace amounts of gases (NH₃, H₂) are secondarily generated by the above-described chemical reaction. These gases volatilize (are released) into the atmosphere without remaining on the surface 12 of the article 11.

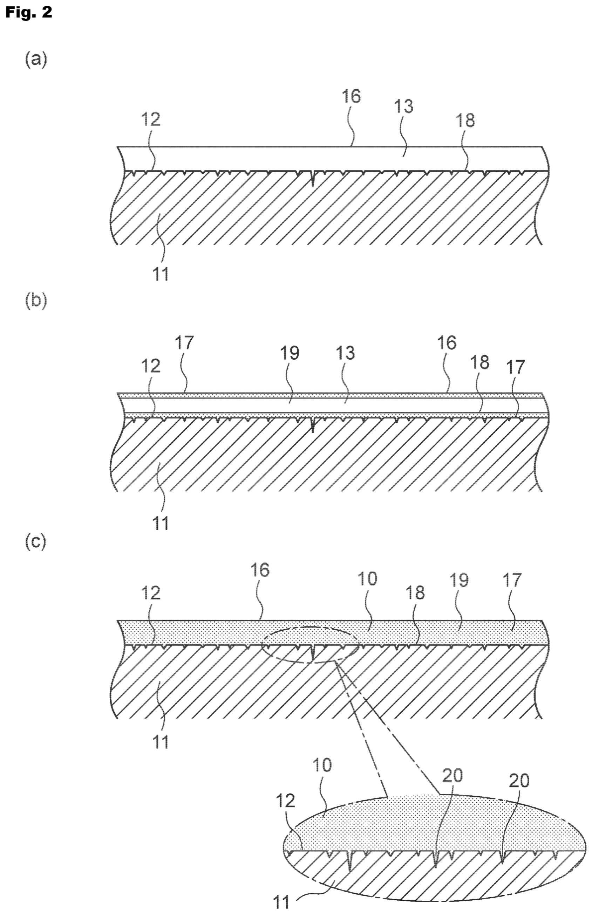

As illustrated in Fig. 2(b), the coating liquid 13 containing the organopolysiloxane and/or the organic polysilazane chemically reacts (deammoniation crosslinking) with water contained in the air in a front surface layer 16 in contact with the air, whereby a gas such as hydrogen and ammonia as a by-product of the organic/inorganic hybrid coating film 10 volatilizes from the surface 12 (front surface layer 16) to the outside air, and a coating layer 17 is formed (generated) on the surface 12 side of the organic/inorganic hybrid coating film 10. The coating liquid 13 coating the surface 12 of the base material 11 chemically reacts (deammoniation crosslinking) with water (water droplets) adhered to the surface 12 or a hydroxyl group -OH (see Fig. 7) existing as a terminal on the surface in a back surface layer 18 in contact with the surface 12 of the base material 11, whereby a gas such as hydrogen and ammonia rises in the coating layer 17 and volatilizes from the surface 12 (front surface layer 16) to the outside air, and a coating layer 17 is formed (generated) on the back surface side 18 of the organic/inorganic hybrid coating film 10.

First, in the front surface layer 16 and the back surface layer 18 of the coating liquid 13, the coating layer 17 (vitrified (mineralized) portion and organified portion) is generated. Next, the coating layer 17 (vitrified (mineralized) portion and organified portion) is formed and expanded from the front surface layer 16 toward the back surface layer 18, and the coating layer 17 (vitrified (mineralized) portion and organified portion) is expanded from the back surface layer 18 toward the front surface layer 16, so that the coating layer 17 (vitrified (mineralized) portion and organified portion) as an intermediate layer 19 is sequentially formed (generated). Finally, the organic/inorganic hybrid coating film 10 is formed (generated) in the front surface layer 16 in contact with the outside air, the back surface layer 18 in contact with the surface 12 of the base material 11, and the intermediate layer 19 between the front surface layer 16 and the back surface layer 18.

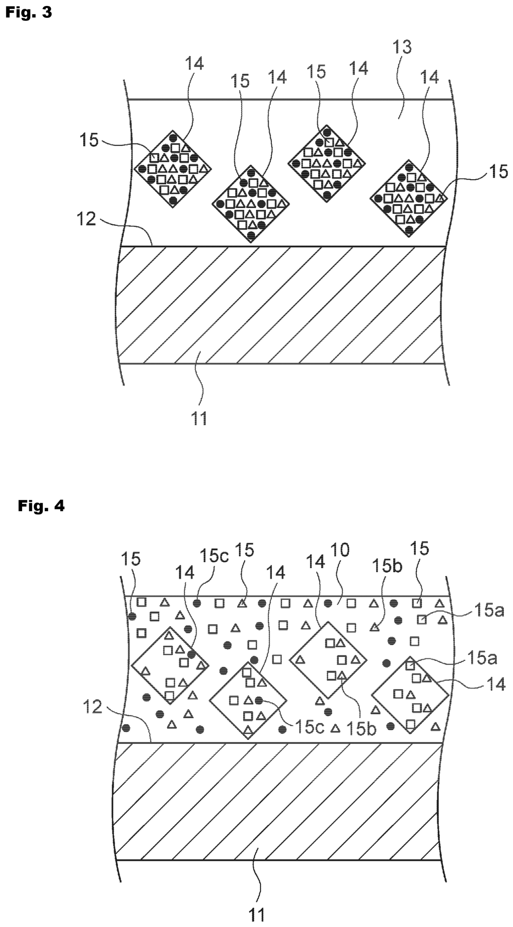

Immediately after the surface 12 of the base material 11 is coated with the coating liquid 13, the glass particles 14 mixed into the coating liquid 13 are dispersively present in the coating liquid 13, but the metal ions 15 of the silver ions 15a (Ag⁺), the copper ions 15b (Cu²⁺), and the zinc ions 15c (Zn²⁺) contained therein do not diffuse toward the surface of the coating liquid as illustrated in Figs. 3 and 5. Specifically, immediately after the surface 12 of the base material 11 is coated with the coating liquid 13, the electron conductive glass formed of the glass particles 14 (conductive glass) containing the metal ions 15 of at least one type among the silver ions 15a (Ag⁺), the copper ions 15b (Cu²⁺), and the zinc ions 15c (Zn²⁺), and the glass based on at least one type among vanadium oxide (V₂O₅), tungsten oxide (WO₃), and molybdenum oxide (MoO₃), and phosphorus oxide (P₂O₅) is dispersively present in the coating liquid 13, but the metal ions 15 of the silver ions 15a (Ag⁺), the copper ions 15b (Cu²⁺), and the zinc ions 15c (Zn²⁺) do not diffuse toward the front surface layer 16 (surface) of the coating liquid 13.

Although the cross-sectional view in Fig. 3 illustrates a state in which the glass particles 14 (conductive glass) containing the silver ions 15a (Ag⁺), the copper ions 15b (Cu²⁺), and the zinc ions 15c (Zn²⁺) are dispersively mixed into the coating liquid 13, the glass particles 14 only need to contain the silver ions 15a (Ag⁺) among the silver ions 15a (Ag⁺), the copper ions 15b (Cu²⁺), and the zinc ions 15c (Zn²⁺), and either of the copper ions (Cu²⁺) and the zinc ions (Zn²⁺) as described above. In addition, although the cross-sectional view in Fig. 5 illustrates a state in which the glass particles 14 (conductive glass) containing only the silver ions 15a (Ag⁺), the glass particles 14 (conductive glass) containing only the copper ions 15b (Cu²⁺), and the glass particles 14 (conductive glass) containing only the zinc ions 15c (Zn²⁺) are dispersively mixed into the coating liquid 13, at least the glass particles 14 (conductive glass) containing only the silver ions 15a (Ag⁺) among the conductive glass containing only the silver ions 15a (Ag⁺), the conductive glass containing only the copper ions 15b (Cu²⁺), and the conductive glass containing only the zinc ions 15c (Zn²⁺) only need to be dispersively mixed into the coating liquid 13 as described above.

Specifically, immediately after the surface 12 of the base material 11 is coated with the coating liquid 13, the electron conductive glass formed of the glass particles 14 (conductive glass) containing the metal ions 15 of at least one type among the silver ions 15a (Ag⁺), the copper ions 15b (Cu²⁺), and the zinc ions 15c (Zn²⁺) and the glass based on vanadium oxide (V₂O₅) and phosphorus oxide (P₂O₅) is dispersively present in the coating liquid 13, but the silver ions 15a (Ag⁺), the copper ions 15b (Cu²⁺), and the zinc ions 15c (Zn²⁺) do not diffuse toward the front surface layer 16 (surface) of the coating liquid 13. In addition, immediately after the surface 12 of the base material 11 is coated with the coating liquid 13, the electron conductive glass formed of the glass particles 14 (conductive glass) containing the metal ions 15 of at least one type among the silver ions 15a (Ag⁺), the copper ions 15b (Cu²⁺), and the zinc ions 15c (Zn²⁺) and the glass based on tungsten oxide (WO₃) and phosphorus oxide (P₂O₅) is dispersively present in the coating liquid 13, but the silver ions 15a (Ag⁺), the copper ions 15b (Cu²⁺), and the zinc ions 15c (Zn²⁺) do not diffuse toward the front surface layer 16 (surface) of the coating liquid 13. Alternatively, the electron conductive glass formed of the glass particles 14 (conductive glass) containing the metal ions 15 of at least one type among the silver ions 15a (Ag⁺), the copper ions 15b (Cu²⁺), and the zinc ions 15c (Zn²⁺) and the glass based on molybdenum oxide (MoO₃) and phosphorus oxide (P₂O₅) is dispersively present in the coating liquid 13, but the silver ions 15a (Ag⁺), the copper ions 15b (Cu²⁺), and the zinc ions 15c (Zn²⁺) do not diffuse toward the front surface layer 16 (surface) of the coating liquid 13.

Furthermore, immediately after the surface 12 of the base material 11 is coated with the coating liquid 13, the conductive glass (electron conductive glass) formed of at least the glass particles 14 (conductive glass) containing only the silver ions 15a (Ag⁺) among the conductive glass containing only the silver ions 15a (Ag⁺), the conductive glass containing only the copper ions 15b (Cu²⁺), and the conductive glass containing only the zinc ions 15c (Zn²⁺), and the glass based on vanadium oxide (V₂O₅) and phosphorus oxide (P₂O₅) is dispersively present in the coating liquid 13, but the silver ions 15a (Ag⁺), the copper ions 15b (Cu²⁺), and the zinc ions 15c (Zn²⁺) do not diffuse toward the front surface layer 16 (surface) of the coating liquid 13. In addition, immediately after the surface 12 of the base material 11 is coated with the coating liquid 13, the conductive glass (electron conductive glass) formed of at least the glass particles 14 (conductive glass) containing only the silver ions 15a (Ag⁺) among the conductive glass containing only the silver ions 15a (Ag⁺), the conductive glass containing only the copper ions 15b (Cu²⁺), and the conductive glass containing only the zinc ions 15c (Zn²⁺), and the glass based on tungsten oxide (WO₃) and phosphorus oxide (P₂O₅) is dispersively present in the coating liquid 13, but the silver ions 15a (Ag⁺), the copper ions 15b (Cu²⁺), and the zinc ions 15c (Zn²⁺) do not diffuse toward the front surface layer 16 (surface) of the coating liquid 13.

In addition, immediately after the surface 12 of the base material 11 is coated with the coating liquid 13, the conductive glass (electron conductive glass) formed of at least the glass particles 14 (conductive glass) containing only the silver ions 15a (Ag⁺) among the conductive glass containing only the silver ions 15a (Ag⁺), the conductive glass containing only the copper ions 15b (Cu²⁺), and the conductive glass containing only the zinc ions 15c (Zn²⁺), and the glass based on molybdenum oxide (MoO₃) and phosphorus oxide (P₂O₅) is dispersively present in the coating liquid 13, but the silver ions 15a (Ag⁺), the copper ions 15b (Cu²⁺), and the zinc ions 15c (Zn²⁺) do not diffuse toward the front surface layer 16 (surface) of the coating liquid 13. Moreover, immediately after the surface 12 of the base material 11 is coated with the coating liquid 13, the vanadium oxide (V₂O₅)-phosphorus oxide (P₂O₅)-based conductive glass (electron conductive glass) containing the silver ions 15a (Ag⁺) is dispersively present in the coating liquid 13, but the silver ions 15a (Ag⁺) do not diffuse toward the front surface layer 16 (surface) of the coating liquid 13.

In the formation (deposition) process of the organic/inorganic hybrid coating film 10 from the organopolysiloxane and/or the organic polysilazane, after the surface 12 of the base material 11 is coated with the coating liquid 13, the silver ions 15a (Ag⁺), the copper ions 15b (Cu²⁺), and the zinc ions 15c (Zn²⁺) migrate inside the coating liquid 13 with the lapse of time, and the metal ions 15 of the silver ions 15a (Ag⁺), the copper ions 15b (Cu²⁺), and the zinc ions 15c (Zn²⁺) dispersively present in the coating liquid 13 diffuse inside the organic/inorganic hybrid coating film 10 toward the front surface layer 16 (surface) of the coating film 10 as illustrated in Figs. 4 and 6.

The organic/inorganic hybrid coating film 10 formed from the organopolysiloxane and/or organic polysilazane is formed of a glass coating layer (amorphous (amorphous) glass coat layer) and an organic coating layer. Since the organic/inorganic hybrid coating film 10 contains SiO2 generated by causing a reaction in the organopolysiloxane and/or the organic polysilazane as a main component, the coat layer 17 is formed that is easily spread planarly and has high density and high hardness (pencil hardness of about 6H to 9H), and the metal ions 15 of the silver ions 15a (Ag⁺), the copper ions 15b (Cu²⁺), and the zinc ions 15c (Zn²⁺) diffuse from the back surface layer 18 (from below) toward the front surface layer 16 (surface) of the coat layer 17.

After the surface 12 of the base material 11 is coated with the coating liquid 13, the metal ions 15 of the silver ions 15a (Ag⁺), the copper ions 15b (Cu²⁺), and the zinc ions 15c (Zn²⁺) diffuse in the organic/inorganic hybrid coating film 10 from the back surface layer 18 (from below) toward the front surface layer 16 (surface) of the coating film 10. Therefore, an antibacterial/antiviral function, an antifungal function, and a deodorizing function by the metal ions 15 of the silver ions 15a (Ag⁺), the copper ions 15b (Cu²⁺), and the zinc ions 15c (Zn²⁺) are exhibited in the organic/inorganic hybrid coating film 10.

The organic/inorganic hybrid coating film 10 is formed into a thin film by the coating liquid 13 containing the organopolysiloxane and/or the organic polysilazane. The average film thickness of the organic/inorganic hybrid coating film 10 is in the range of 0.2 µm or more to 20 µm or less, and preferably in the range of 0.5 µm or more to 20 µm or less. When the average film thickness of the organic/inorganic hybrid coating film 10 is less than 0.2 µm, the organic/inorganic hybrid coating film 10 decreases in strength to lose its protective function, and cannot sufficiently protect the surface 12 of the base material 11. When the average film thickness of the organic/inorganic hybrid coating film 10 exceeds 20 µm, the flexibility of the organic/inorganic hybrid coating film 10 decreases, and the organic/inorganic hybrid coating film 10 may be separated from the surface 12 of the base material 11 due to deformation of the surface 12. Although the organic/inorganic hybrid coating film 10 is a coating film containing SiO2 as a main component, the organic/inorganic hybrid coating film 10 has excellent flexibility, and because of an anchor effect by an anchor portion 20 as well, is not separated even when the surface 12 of the base material 11 is an article that is to be deformed such as a cloth material or a nonwoven fabric, which makes it possible to maintain the coating state of the organic/inorganic hybrid coating film 10 following the deformation of the surface 12.

As illustrated in an example of a structural image of the organic/inorganic hybrid coating film 10 in Fig. 5, it is assumed that a crosslinked structure is formed by a crosslinking reaction occurring between a hydrolysis product having a -(Si(OH)₂-O-Si(OH)₂)- unit generated by the chemical reaction of the alkyl silicate condensate with water and a part of a main chain by a siloxane bond (Si-O-Si) in each coating layer 17 (front surface layer 16, intermediate layer 19, and back surface layer 18), so that the organic/inorganic hybrid coating film 10 has a dense and flexible structure. In addition, it is assumed that a hydrophobic methyl group (CH₃) derived from the organopolysiloxane and/or the organic polysilazane and a hydrophilic hydroxyl group (OH) derived from the hydrolysis product of the alkyl silicate condensate can be coordinated to the surface of the organic/inorganic hybrid coating film 10 by forming the crosslinked structure.

On the surface 12 of the base material 11 before being coated with the organic/inorganic hybrid coating film 10, a large number of micro-level fine uneven portions are formed by small scratches or the like generated in a producing process or the like unless a special surface layer treatment such as mirror finishing is performed. When the coating liquid 13 is cured in a state of coating the surface 12 of the base material 11 and entering the uneven portions, the anchor portion 20 of the organic/inorganic hybrid coating film 10 cured entering the uneven portions exerts an anchor effect, and the organic/inorganic hybrid coating film 10 is more firmly stuck to the surface 12 of the base material 11.

In a case where the surface 12 of the base material 11 is a smooth surface having substantially no uneven portion, uneven portions having an average roughness of about 1 to 500 µm may be formed on the surface 12 by performing a roughening treatment on the surface 12 as a pretreatment of the coating with the coating liquid 13. By performing the roughening treatment in this manner, the anchor effect by the anchor portion 20 of the organic/inorganic hybrid coating film 10 can be obtained. After the roughening treatment, a cleaning treatment is performed to blow off metal powder, plastic powder, or the like generated on the surface of the base material using an air injection means such as an air gun. After the cleaning treatment, dew condensation or the like is generated on the surface 12 of the base material 11 by leaving the surface 12 for a predetermined time, and naturally derived water is adhered to the surface 12.

In this case, after the surface 12 of the base material 11 is roughened and cleaned, water is actively adhered to the surface 12 on which the uneven portions are formed by the roughening by a water imparting means such as an atomizer, and then the surface 12 is coated with the coating liquid 13. In this way, the chemical reaction between the water adhered to the surface 12 of the base material 11 and the coating liquid 13 in contact with the surface 12 can be promoted. Note that water may be adhered to the surface 12 of the base material 11 by the water imparting means without performing the roughening treatment. The uneven portions originally formed on the surface 12 of the base material 11 before being coated with the organic/inorganic hybrid coating film 10 formed from the organopolysiloxane and/or the organic polysilazane are coated with the organic/inorganic hybrid coating film 10, so that the surface 12 is formed smoother after being coated than before being coated.

As illustrated in Fig. 7, since the organic/inorganic hybrid coating film 10 formed on the surface 12 of the base material 11 has a porous structure, the metal ions 15 of the silver ions 15a (Ag⁺), the copper ions 15b (Cu²⁺), and the zinc ions 15c (Zn²⁺) can move inside the organic/inorganic hybrid coating film 10, and these metal ions 15 are eluted from the organic/inorganic hybrid coating film 10.

In the organic/inorganic hybrid coating film 10, the content of the glass particles 14 diffusively present therein is in a range of 0.1 vol% or more to 30 vol% or less, and preferably in a range of 1 vol% or more to 10 vol% or less. When the content of the glass particles 14 diffusively present in the organic/inorganic hybrid coating film 10 is less than 0.1 vol%, the content of the glass particles 14 in the organic/inorganic hybrid coating film 10 is small, and the organic/inorganic hybrid coating film 10 cannot exhibit a sufficient antibacterial/antiviral function, a sufficient antifungal function, and a sufficient deodorizing function. When the content of the glass particles 14 diffusively present in the organic/inorganic hybrid coating film 10 exceeds 30 vol%, the adhesion of the organic/inorganic hybrid coating film 10 to the surface 12 of the base material 11 is significantly reduced, and the smooth organic/inorganic hybrid coating film 10 cannot be formed on the surface 12.

Since the content of the glass particles 14 diffusively present in the organic/inorganic hybrid coating film 10 is in the above range, the organic/inorganic hybrid coating film 10 has an excellent antibacterial/antiviral function, an excellent antifungal function, and an excellent deodorizing function, and maintains the antibacterial/antiviral function, the antifungal function, and the deodorizing function for a long period of time. Furthermore, the organic/inorganic hybrid coating film 10 has high adhesion to the surface 12 of the base material 11, and a smooth thin film can be formed on the surface 12 of the base material 11.

In the organic/inorganic hybrid coating film 10, the glass particles 14 have an average particle diameter D₅₀ of 5 µm or less, and preferably 3 µm or less. When the average particle diameter D₅₀ of the glass particles 14 in the organic/inorganic hybrid coating film 10 exceeds 5 µm, the metal ions 15 of the silver ions 15a (Ag⁺), the copper ions 15b (Cu²⁺), and the zinc ions 15c (Zn²⁺) cannot sufficiently diffuse inside the organic/inorganic hybrid coating film 10 toward the front surface layer 16 (surface) of the coating film 10 during a period from the coating with the coating liquid 13 to the deposition of the organic/inorganic hybrid coating film 10, and the organic/inorganic hybrid coating film 10 cannot exhibit a sufficient antibacterial/antiviral function, a sufficient antifungal function, and a sufficient deodorizing function. In addition, the adhesion of the organic/inorganic hybrid coating film 10 to the surface 12 of the base material 11 is significantly reduced, and the smooth organic/inorganic hybrid coating film 10 cannot be formed on the surface 12. Since the average particle diameter D₅₀ of the glass particles 14 is in the above range, the organic/inorganic hybrid coating film 10 has an excellent antibacterial/antiviral function, an excellent antifungal function, and an excellent deodorizing function, and maintains the antibacterial/antiviral function, the antifungal function, and the deodorizing function for a long period of time. Furthermore, the organic/inorganic hybrid coating film 10 has high adhesion to the surface 12 of the base material 11, and a smooth thin film can be formed on the surface 12 of the base material 11.

In the organic/inorganic hybrid coating film 10 (coating film), since the glass particles 15 have electron conductivity, it is possible to introduce a large amount of the metal ions 15 of the silver ions 15a (Ag⁺), the copper ions 15b (Cu²⁺), and the zinc ions 15c (Zn²⁺) into the organic/inorganic hybrid coating film 10, and make the organic/inorganic hybrid coating film 10 contain the large amount of metal ions 15 of the silver ions 15a, the copper ions 15b, and the zinc ions 15c.

Since the organic/inorganic hybrid coating film 10 (coating film) contains the large amount of metal ions 15 of the silver ions 15a (Ag⁺), the copper ions 15b (Cu²⁺), and the zinc ions 15c (Zn²⁺), the organic/inorganic hybrid coating film 10 has an excellent antibacterial/antiviral function, an excellent antifungal function, and an excellent deodorizing function, can reliably kill various bacteria, various viruses, and various mold fungi, and can reliably remove an unpleasant odor.

The organic/inorganic hybrid coating film 10 (coating film) can impart an excellent antibacterial/antiviral function, an excellent antifungal function, and an excellent deodorizing function to the surfaces 12 of all the base materials 11 (objects to be coated) without being limited to a particular object to be coated with the organic/inorganic hybrid coating film 10, and by containing the large amount of metal ions 15 of the silver ions 15a (Ag⁺), the copper ions 15b (Cu²⁺), and the zinc ions 15c (Zn²⁺), can maintain the antibacterial/antiviral function, the antifungal function, and the deodorizing function for a long period of time.

Suppose that the organic/inorganic hybrid coating film 10 (coating film) in which the glass particles 14 are diffusively present is formed (deposited) on a medical garment (mask, white coat, protective clothing, gloves, etc.) or medical bedding (coverlet, pillowcase, curtain, patient amenities, etc.). In this case, even if various bacteria, various viruses, and various mold fungi adhere to the medical garment or the medical bedding, it is possible to kill the various bacteria, various viruses, and various mold fungi by the metal ions 15 of the silver ions 15a (Ag⁺), the copper ions 15b (Cu²⁺), and the zinc ions 15c (Zn²⁺) diffused in the organic/inorganic hybrid coating film 10, to prevent generation and propagation of various bacteria, various viruses, and various mold fungi on the medical garment or the medical bedding, and to prevent generation of an unpleasant odor from the medical garment.

Suppose that the organic/inorganic hybrid coating film 10 (coating film) in which the glass particles 14 are diffusively present is formed (deposited) on a medical instrument (scissors, scalpel, other instruments, etc.) or in an in-hospital facility (handrail, doorknob, wall, floor, elevator, escalator, etc.). In this case, even if various bacteria, various viruses, and various mold fungi adhere to the medical instrument or enter the in-hospital facility, it is possible to kill the various bacteria, various viruses, and various mold fungi by the metal ions 15 of the silver ions 15a (Ag⁺), the copper ions 15b (Cu²⁺), and the zinc ions 15c (Zn²⁺) diffused in the organic/inorganic hybrid coating film 10, to prevent generation and propagation of various bacteria, various viruses, and various mold fungi on the medical instrument or in the in-hospital facility, to prevent a biohazard in a medical institution, and to prevent generation of an unpleasant odor in the medical institution.

Suppose that the organic/inorganic hybrid coating film 10 (coating film) in which the glass particles 14 are diffusively present is formed (deposited) in a transportation means (train, bus, aircraft, ship, vehicle, etc.). In this case, even if various bacteria, various viruses, and various mold fungi enter the transportation means, it is possible to kill the various bacteria, various viruses, and various mold fungi by the metal ions 15 of the silver ions 15a (Ag⁺), the copper ions 15b (Cu²⁺), and the zinc ions 15c (Zn²⁺) diffused in the organic/inorganic hybrid coating film 10, to prevent generation and propagation of various bacteria, various viruses, and various mold fungi in the transportation means, and to prevent infection with various bacteria or various viruses in the transportation means.

Suppose that the organic/inorganic hybrid coating film 10 (coating film) in which the glass particles 14 are diffusively present is formed (deposited) on a garment (underwear, T-shirt, socks, sportswear, diaper, etc.). In this case, even if various bacteria, various viruses, and various mold fungi adhere to the garment, it is possible to kill the various bacteria, various viruses, and various mold fungi by the metal ions 15 of the silver ions 15a (Ag⁺), the copper ions 15b (Cu²⁺), and the zinc ions 15c (Zn²⁺) diffused in the organic/inorganic hybrid coating film 10, to prevent generation and propagation of various bacteria, various viruses, and various mold fungi on the garment, and to prevent generation of an unpleasant odor from the garment.

Suppose that the organic/inorganic hybrid coating film 10 (coating film) in which the glass particles 10 are diffusively present is formed (deposited) on an article for pets (toilet for pets, cage for pets, etc.). In this case, even if various bacteria, various viruses, and various mold fungi adhere to the article for pets, it is possible to kill the various bacteria, various viruses, and various mold fungi by the metal ions 15 of the silver ions 15a (Ag⁺), the copper ions 15b (Cu²⁺), and the zinc ions 15c (Zn²⁺) diffused in the organic/inorganic hybrid coating film 10, to prevent generation and propagation of various bacteria, various viruses, and various mold fungi on the article for pets, and to prevent pets from being infected with various bacteria or various viruses.

Suppose that the organic/inorganic hybrid coating film 10 (coating film) in which the glass particles 14 are diffusively present is formed (deposited) on a sanitary article (kitchen utensil, toilet article, bath article, washstand, etc.) or an article for food (food tray, kitchen utensil, tableware, etc.). In this case, even if various bacteria, various viruses, and various mold fungi adhere to the sanitary article or the article for food, it is possible to kill the various bacteria, various viruses, and various mold fungi by the metal ions 15 of the silver ions 15a (Ag⁺), the copper ions 15b (Cu²⁺), and the zinc ions 15c (Zn²⁺) diffused in the organic/inorganic hybrid coating film 10, to prevent generation and propagation of various bacteria, various viruses, and various mold fungi on the sanitary article or the article for food, and to hygienically use the sanitary article or the article for food.

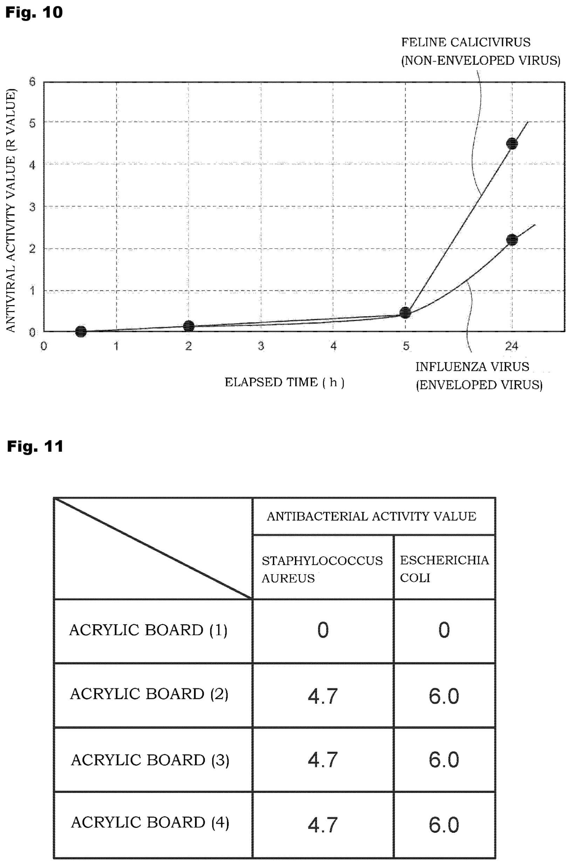

Fig. 9 is a diagram illustrating a relationship between a time and an antiviral activity value in the organic/inorganic hybrid coating film 10 formed from the coating liquid 13 containing the organopolysiloxane (siloxane-based solution) as a main component and the glass particles 14 mixed therein, and Fig. 10 is a graph illustrating a change in the antiviral activity value with the lapse of time after the coating liquid 13 containing the organopolysiloxane (siloxane-based solution) as a main component and the glass particles 14 mixed therein is applied to the surface 12 of the base material 11.

The coating liquid 13 containing the organopolysiloxane (siloxane-based solution) as a main component and the glass particles 14 mixed therein was applied to the surface 12 of the acrylic board 11 (base material 11) (50 × 50 × 5 mm), and the organic/inorganic hybrid coating film 10 was deposited on the surface 12 of the acrylic board 11. As described above, the deposition conditions are as follows: after the surface 12 of the acrylic board 11 (base material 11) is coated with the coating liquid 13, the surface 12 of the acrylic board 11 (base material 11) is left at room temperature (normal temperature) for a predetermined time (24 hours or more) without being heated, or after the surface 12 of the acrylic board 11 (base material 11) is coated with the coating liquid 13, the surface 12 of the acrylic board 11 is left at room temperature (normal temperature) for a predetermined time (24 hours or more) while being irradiated with ultraviolet rays, or after the surface 12 of the acrylic board 11 (base material 11) is coated with the coating liquid 13, the surface 12 of the acrylic board 11 is irradiated with infrared rays to be heated to a temperature of less than 400°C and left for a predetermined time (24 hours or more) while being irradiated with ultraviolet rays.

After the coating liquid 13 is applied to the surface 12 of the acrylic board 11, the organic/inorganic hybrid coating film 10 is formed (deposited) on the surface 12. In the organic/inorganic hybrid coating film 10 formed (deposited) on the surface 12 of the acrylic board 11 (base material 11), the content of the glass particles 14 is 15 vol%, and the average particle diameter D₅₀ of the glass particles 14 is 5 µm or less.

After coating the acrylic board 11 with the coating liquid 13, the surface 12 of the acrylic board 11 was inoculated with an enveloped virus (influenza virus (or novel coronavirus, herpesvirus, rubella virus)), and an antiviral activity value against the enveloped virus (influenza virus) with the lapse of time was measured. The measurement time of the antiviral activity value against the enveloped virus (influenza virus) is after the lapse of 0.5 hours from the inoculation of the acrylic board 11 with the enveloped virus, after the lapse of 2 hours from the inoculation of the acrylic board 11 with the enveloped virus, after the lapse of 5 hours from the inoculation of the acrylic board 11 with the enveloped virus, and after the lapse of 24 hours from the inoculation of the acrylic board 11 with the enveloped virus.

In addition, after coating the acrylic board 11 with the coating liquid 13, the surface 12 of the acrylic board 11 was inoculated with a non-enveloped virus (feline calicivirus (or rotavirus, norovirus)), and an antiviral activity value against the non-enveloped virus (feline calicivirus) with the lapse of time was measured. The measurement time of the antiviral activity value against the non-enveloped virus is after the lapse of 0.5 hours from the inoculation of the acrylic board 11 with the non-enveloped virus, after the lapse of 2 hours from the inoculation of the acrylic board 11 with the non-enveloped virus, after the lapse of 5 hours from the inoculation of the acrylic board 11 with the non-enveloped virus, and after the lapse of 24 hours from the inoculation of the acrylic board 11 with the non-enveloped virus.

As illustrated in Figs. 7 and 8, for the enveloped virus (influenza virus, novel coronavirus, herpesvirus, rubella virus), the antiviral activity value is 0 after the lapse of 0.5 hours from the coating of the acrylic board 11 with the coating liquid 13, the antiviral activity value is 0.1 after the lapse of 2 hours from the coating of the acrylic board 11 with the coating liquid 13, and the antiviral activity value is 0.4 after the lapse of 5 hours from the coating of the acrylic board 11 with the coating liquid 13. Almost no antiviral activity (antiviral function) is exhibited until the lapse of 5 hours from the coating of the acrylic board 11 with the coating liquid 13.

However, the antiviral activity increases to 2.2 at a time point when 24 hours elapse from the coating of the acrylic board 11 with the coating liquid 13. The antiviral activity of 2 or more is regarded as having the antiviral function. As is clear from Figs. 9 and 10, it has been found that the organic/inorganic hybrid coating film 10 containing the glass particles 14 described above has an excellent antiviral function against the enveloped virus after the lapse of 24 hours from the coating of the acrylic board 11 with the coating liquid 13, and can reliably kill various enveloped viruses.

In addition, for the non-enveloped virus (feline calicivirus, rotavirus, norovirus), the antiviral activity value is 0 after the lapse of 0.5 hours from the coating of the acrylic board 11 with the coating liquid 13, the antiviral activity value is 0.1 after the lapse of 2 hours from the coating of the acrylic board 11 with the coating liquid 13, and the antiviral activity value is 0.3 after the lapse of 5 hours from the coating of the acrylic board 11 with the coating liquid 13. Almost no antiviral activity (antiviral function) is exhibited until the lapse of 5 hours from the coating of the acrylic board 11 with the coating liquid 13.

However, the antiviral activity increases to 4.5 at a time point when 24 hours elapse from the coating of the acrylic board 11 with the coating liquid. As is clear from Figs. 9 and 10, it has been found that the organic/inorganic hybrid coating film 10 containing the glass particles 14 described above has an excellent antiviral function against the non-enveloped virus after the lapse of 24 hours from the coating of the acrylic board 11 with the coating liquid 13, and can reliably kill various non-enveloped viruses.

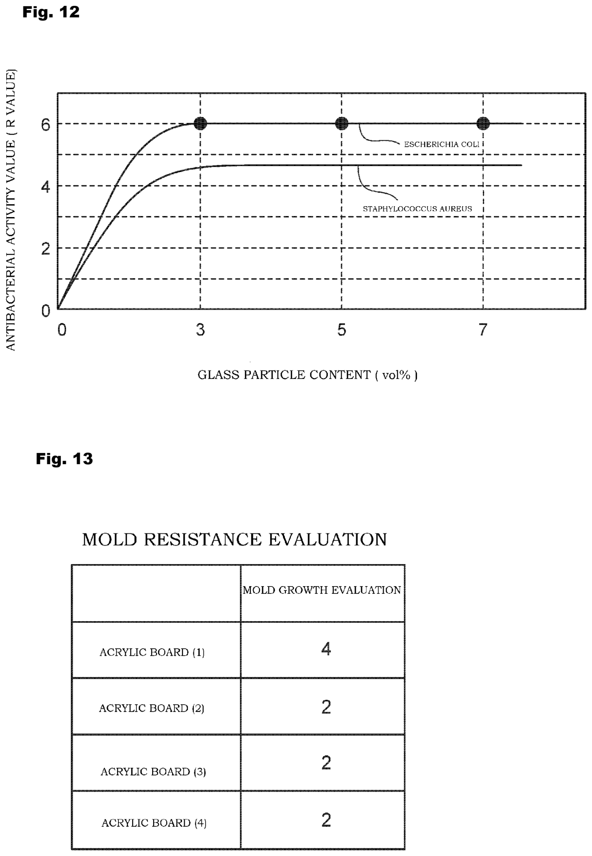

Fig. 11 is a diagram illustrating an antibacterial activity value of the organic/inorganic hybrid coating film 10 formed from the coating liquid 13 containing the organopolysiloxane (siloxane-based solution) as a main component and the glass particles 14 mixed therein, and Fig. 12 is a graph illustrating a relationship between the content of the glass particles 14 in the organic/inorganic hybrid coating film 10 and the antibacterial activity value.

In the evaluation of the antibacterial activity value illustrated in Figs. 11 and 12, there were prepared: the acrylic board 11 (1) (base material 11) (50 × 50 × 5 mm) obtained by forming (depositing) no organic/inorganic hybrid coating film 10 thereon, the acrylic board 11 (2) obtained by applying the coating liquid 13 containing the organopolysiloxane (siloxane-based solution) as a main component and 3 vol% of the glass particles 14 mixed therein to the surface 12 of the acrylic board 11 (base material 11) (50 × 50 × 5 mm), and depositing the organic/inorganic hybrid coating film 10 (the content of the glass particles 14 was 3 vol%) on the surface 12 of the acrylic board 11, the acrylic board 11 (3) obtained by applying the coating liquid 13 containing the organopolysiloxane (siloxane-based solution) as a main component and 5 vol% of the glass particles 14 mixed therein to the surface 12 of the acrylic board 11 (base material 11) (50 × 50 × 5 mm), and depositing the organic/inorganic hybrid coating film 10 (the content of the glass particles 14 was 5 vol%) on the surface 12 of the acrylic board 11, and the acrylic board 11 (4) obtained by applying the coating liquid 13 containing the organopolysiloxane (siloxane-based solution) as a main component and 7 vol% of the glass particles 14 mixed therein to the surface 12 of the acrylic board 11 (base material 11) (50 × 50 × 5 mm), and depositing the organic/inorganic hybrid coating film 10 (the content of the glass particles 14 was 7 vol%) on the surface 12 of the acrylic board 11. The glass particles 14 have an average particle diameter D₅₀ of 5 µm or less.

As described above, the deposition conditions for the organic/inorganic hybrid coating film 10 on the acrylic board 11 (2) to the acrylic board 11 (4) are as follows: after the surfaces 12 of the acrylic board 11 (2) to the acrylic board 11 (4) (base materials 11) are coated with the coating liquid 13, the surfaces 12 of the acrylic board 11 (2) to the acrylic board 11 (4) (base materials 11) are left at room temperature (normal temperature) for a predetermined time (24 hours or more) without being heated, or after the surfaces 12 of the acrylic board 11 (2) to the acrylic board 11 (4) (base materials 11) are coated with the coating liquid 13, the surfaces 12 of the acrylic board 11 (2) to the acrylic board 11 (4) are left at room temperature (normal temperature) for a predetermined time (24 hours or more) while being irradiated with ultraviolet rays, or after the surfaces 12 of the acrylic board 11 (2) to the acrylic board 11 (4) (base materials 11) are coated with the coating liquid 13, the surfaces 12 of the acrylic board 11 (2) to the acrylic board 11 (4) are irradiated with infrared rays to be heated to a temperature of less than 400°C and left for a predetermined time (24 hours or more) while being irradiated with ultraviolet rays.

In the acrylic board 11 (2) to the acrylic board 11 (4), 24 hours elapse from the application of the coating liquid 13 to the surfaces 12 of these acrylic boards 11, and the organic/inorganic hybrid coating film 10 is formed (deposited) on the surfaces 12. In the organic/inorganic hybrid coating film 10 deposited on the surface 12 of the acrylic board 11 (2) (base material 11), the content of the glass particles 14 is 3 vol%, and the average particle diameter D₅₀ of the glass particles 14 is 5 µm or less. In the organic/inorganic hybrid coating film 10 deposited on the surface 12 of the acrylic board 11 (3) (base material 11), the content of the glass particles 14 is 5 vol%, and the average particle diameter D₅₀ of the glass particles 14 is 5 µm or less. In the organic/inorganic hybrid coating film 10 deposited on the surface 12 of the acrylic board 11 (4) (base material 11), the content of the glass particles 14 is 7 vol%, and the average particle diameter D₅₀ of the glass particles 14 is 5 µm or less. After the organic/inorganic hybrid coating film 10 was formed on the surfaces 12 of the acrylic board 11 (2) to the acrylic board 11 (4), the surfaces 12 of the acrylic board 11 (1) to the acrylic board 11 (4) were inoculated with Staphylococcus aureus and Escherichia coli, and antibacterial activity values against these bacteria were measured.

As illustrated in Figs. 11 and 12, in the acrylic board 11 (1), the antibacterial activity value against Staphylococcus aureus and the antibacterial activity value against Escherichia coli are 0. In a case where Staphylococcus aureus or Escherichia coli adheres to the surface 12 of the acrylic board 11 (1), the Staphylococcus aureus or Escherichia coli cannot be killed, and the Staphylococcus aureus or Escherichia coli may propagate on the acrylic board 11 (1) depending on conditions.

In the acrylic board 11 (2) in which the organic/inorganic hybrid coating film 10 formed from the coating liquid 13 containing 3 vol% of the glass particles 14 mixed therein is formed (deposited) on the surface 12, the antibacterial activity value against Staphylococcus aureus is 4.7, and the antibacterial activity value against Escherichia coli is 2, which satisfy the antibacterial activity value of 2 or more. Even if Staphylococcus aureus or Escherichia coli adheres to the surface 12 of the acrylic board 11 (2), the Staphylococcus aureus or Escherichia coli can be killed by the metal ions 15 of the silver ions 15a (Ag⁺), the copper ions 15b (Cu²⁺), and the zinc ions 15c (Zn²⁺) of the organic/inorganic hybrid coating film 10 formed on the acrylic board 11 (2), and the Staphylococcus aureus or Escherichia coli does not propagate.

In the acrylic board 11 (3) in which the organic/inorganic hybrid coating film 10 formed from the coating liquid 13 containing 5 vol% of the glass particles 14 mixed therein is formed (deposited) on the surface 12, the antibacterial activity value against Staphylococcus aureus is 4.7, and the antibacterial activity value against Escherichia coli is 2, which satisfy the antibacterial activity value of 2 or more. Even if Staphylococcus aureus or Escherichia coli adheres to the surface 12 of the acrylic board 11 (3), the Staphylococcus aureus or Escherichia coli can be killed by the metal ions 15 of the silver ions 15a (Ag⁺), the copper ions 15b (Cu²⁺), and the zinc ions 15c (Zn²⁺) of the organic/inorganic hybrid coating film 10 formed on the acrylic board (3), and the Staphylococcus aureus or Escherichia coli does not propagate.

In the acrylic board 11 (4) in which the organic/inorganic hybrid coating film 10 formed from the coating liquid 13 containing 7 vol% of the glass particles 14 mixed therein is formed (deposited) on the surface 12, the antibacterial activity value against Staphylococcus aureus is 4.7, and the antibacterial activity value against Escherichia coli is 2, which satisfy the antibacterial activity value of 2 or more. Even if Staphylococcus aureus or Escherichia coli adheres to the surface 12 of the acrylic board 11 (4), the Staphylococcus aureus or Escherichia coli can be killed by the metal ions 15 of the silver ions 15a (Ag⁺), the copper ions 15b (Cu²⁺), and the zinc ions 15c (Zn²⁺) of the organic/inorganic hybrid coating film 10 formed on the acrylic board 11 (4), and the Staphylococcus aureus or Escherichia coli does not propagate.

As is clear from Figs. 11 and 12, it has been found that the organic/inorganic hybrid coating film 10 containing the glass particles 14 described above has an excellent antibacterial function against Staphylococcus aureus and Escherichia coli, achieves an inactivation rate of 99.9999% against Staphylococcus aureus and Escherichia coli, and can reliably kill Staphylococcus aureus and Escherichia coli.

Fig. 13 is a diagram illustrating mold resistance evaluation of the organic/inorganic hybrid coating film formed from the coating liquid containing the organopolysiloxane (siloxane-based solution) as a main component and the glass particles mixed therein.

In the mold resistance evaluation illustrated in Fig. 13, there were prepared: an acrylic board (1) (base material) (50 × 50 × 5 mm) obtained by forming (depositing) no organic/inorganic hybrid coating film thereon, an acrylic board (2) obtained by applying the coating liquid containing the organopolysiloxane (siloxane-based solution) as a main component and 3 vol% of the glass particles mixed therein to the surface of the acrylic board (base material) (50 × 50 × 5 mm), and depositing the organic/inorganic hybrid coating film on the surface of the acrylic board, an acrylic board (3) obtained by applying the coating liquid containing the organopolysiloxane (siloxane-based solution) as a main component and 5 vol% of the glass particles mixed therein to the surface of the acrylic board (base material) (50 × 50 × 5 mm), and depositing the organic/inorganic hybrid coating film on the surface of the acrylic board, and an acrylic board (4) obtained by applying the coating liquid containing the organopolysiloxane (siloxane-based solution) as a main component and 7 vol% of the glass particles mixed therein to the surface of the acrylic board (base material) (50 × 50 × 5 mm), and depositing the organic/inorganic hybrid coating film on the surface of the acrylic board. The glass particles have an average particle diameter D₅₀ of 5 µm or less.

As described above, the deposition conditions for the acrylic board (2) to the acrylic board (4) are as follows: after the surfaces of the acrylic board (2) to the acrylic board (4) (base materials) are coated with the coating liquid, the surfaces of the acrylic board (2) to the acrylic board (4) (base materials) are left at room temperature (normal temperature) for a predetermined time (24 hours or more) without being heated, or after the surfaces of the acrylic board (2) to the acrylic board (4) (base materials) are coated with the coating liquid, the surfaces of the acrylic board (2) to the acrylic board (4) are left at room temperature (normal temperature) for a predetermined time (24 hours or more) while being irradiated with ultraviolet rays, or after the surfaces of the acrylic board (2) to the acrylic board (4) (base materials) are coated with the coating liquid, the surfaces of the acrylic board (2) to the acrylic board (4) are irradiated with infrared rays to be heated to a temperature of less than 400°C and left for a predetermined time (24 hours or more) while being irradiated with ultraviolet rays.

In the acrylic board (2) to the acrylic board (4), 24 hours elapse from the application of the coating liquid to the surfaces of these acrylic boards, and the organic/inorganic hybrid coating film is formed (deposited) on the surfaces. In the organic/inorganic hybrid coating film deposited on the surface of the acrylic board (2) (base material), the content of the glass particles 14 is 3 vol%, and the average particle diameter D₅₀ of the glass particles 14 is 5 µm or less. In the organic/inorganic hybrid coating film deposited on the surface of the acrylic board (3) (base material), the content of the glass particles 14 is 5 vol%, and the average particle diameter D₅₀ of the glass particles 14 is 5 µm or less. In the organic/inorganic hybrid coating film deposited on the surface of the acrylic board (4) (base material), the content of the glass particles 14 is 7 vol%, and the average particle diameter D₅₀ of the glass particles 14 is 5 µm or less.

After the organic/inorganic hybrid coating film was formed on the surfaces of the acrylic board (2) to the acrylic board (4), the surfaces of the acrylic board (1) to the acrylic board (4) were inoculated with spores of mixed mold species of a 5 species mixture of Aspergillus niger NBRC 105649, Penicillium pinophilum NBRC 100533, Paecilomyces variotii NBRC 107725, Trichoderna virens NBRC 6355, and Chaetomium globosum NBRC 6347, and the mold fungi were cultured for 4 weeks. After that, the mold resistance in the acrylic board (1) to the acrylic board (4) was measured. As the culture conditions, the acrylic board (1) to the acrylic board (4) were placed on mineral and glucose-containing agar media contained in first to fourth containers, a mold spore liquid (5 species mixture) containing mineral and glucose was sprayed onto the media, the mold was cultured at about 29°C and 95%rh or more for 4 weeks, and then growth states of the mold in the first to fourth containers were visually and microscopically determined.

The mold growth state is evaluated as follows: a state in which mycelia grow vigorously and the mold covers the entire medium is evaluated as (5), a state in which the area of the mold is 50% or more of the total area of the medium under observation with a microscope is evaluated as (4), a state in which the area of the mold is 50% or more and less than 50% of the total area of the medium under observation with a microscope is evaluated as (3), a state in which the area of the mold is less than 25% of the total area of the medium under observation with a microscope is evaluated as (2), a state in which mold generation can be confirmed under observation with a microscope although it cannot be confirmed with naked eyes is evaluated as (1), and a state in which mold growth is not observed with naked eyes or under observation with a microscope is evaluated as (0). The evaluation (0) to the evaluation (2) are regarded as having the mold resistance.

The acrylic board (1) placed on the mineral and glucose-containing agar medium in the first container was evaluated as (4), and the area of the mold was 50% or more of the total area of the medium. The acrylic board (2) placed on the mineral and glucose-containing agar medium in the second container, the acrylic board (3) placed on the mineral and glucose-containing agar medium in the third container, and the acrylic board (4) placed on the mineral and glucose-containing agar medium in the fourth container were evaluated as (2), and the mold resistance was observed in the acrylic board (2) to the acrylic board (4). As is clear from Fig. 13, it has been found that the organic/inorganic hybrid coating film containing the glass particles described above has an excellent antifungal function against the mold fungi, and can reliably kill various mold fungi.

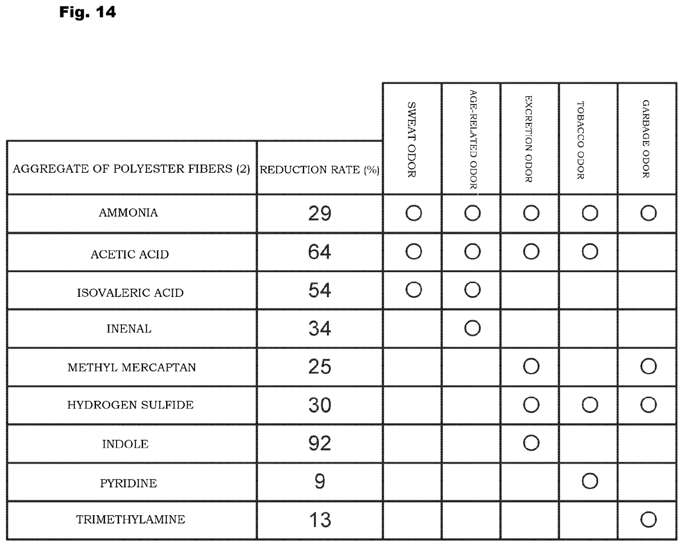

Fig. 14 is a diagram illustrating deodorizing performance evaluation of the organic/inorganic hybrid coating film formed from the coating liquid containing the organopolysiloxane (siloxane-based solution) as a main component and the glass particles mixed therein. In the deodorizing performance evaluation illustrated in Fig. 14, the deodorizing performance was evaluated for ammonia as a source of a sweat odor, an age-related odor, an excretion odor, a tobacco odor, and a garbage odor, acetic acid as a source of a sweat odor, an age-related odor, an excretion odor, and a tobacco odor, isovaleric acid as a source of a sweat odor and an age-related odor, inenal as a source of an age-related odor, methyl mercaptan as a source of an excretion odor and a garbage odor, hydrogen sulfide as a source of an excretion odor, a tobacco odor, and a garbage odor, indole as a source of an excretion odor, pyridine as a source of a tobacco odor, and trimethylamine as a source of a garbage odor.

In the deodorizing performance evaluation illustrated in Fig. 14, an aggregate of polyester fibers (1) (base material) obtained by forming (depositing) no organic/inorganic hybrid coating film thereon, and an aggregate of polyester fibers (2) (base material) obtained by impregnating polyester fibers (base material) with the coating liquid containing the organopolysiloxane (siloxane-based solution) as a main component and 7 vol% of the glass particles mixed therein and impregnating the polyester fibers with the organic/inorganic hybrid coating film were prepared. The glass particles have an average particle diameter D₅₀ of 5 µm or less.

The deposition conditions for the polyester fibers (2) are as follows: after the polyester fibers (2) (base material) are impregnated with the coating liquid, the surface of the polyester fibers (2) (base material) is left at room temperature (normal temperature) for a predetermined time (24 hours or more) without being heated, or after the polyester fibers (2) (base material) are impregnated with the coating liquid, the surface of the polyester fibers (2) is left at room temperature (normal temperature) for a predetermined time (24 hours or more) while being irradiated with ultraviolet rays, or after the polyester fibers (2) (base material) are impregnated with the coating liquid, the surface of the polyester fibers (2) is irradiated with infrared rays to be heated to a temperature of less than 400°C and left for a predetermined time (24 hours or more) while being irradiated with ultraviolet rays.

In the polyester fibers (2), 24 hours elapse from the impregnation of the acrylic board (base material) with the coating liquid, and the organic/inorganic hybrid coating film is formed (deposited) on the surface thereof. In the organic/inorganic hybrid coating film deposited on the surface of the polyester fibers (2) (base material), the content of the glass particles is 7 vol%, and the average particle diameter D₅₀ of the glass particles is 5 µm or less. The aggregate of the polyester fibers (1) (base material) and a measurement target gas were put into a first sampling bag, and the aggregate of the polyester fibers (2) (base material) and a measurement target gas were put into a second sampling bag. The gas concentrations in these sampling bags after being left for 2 hours were measured with a detector tube, and the reduction rates were calculated.

The reduction rates of the gas concentrations (ammonia, acetic acid, isovaleric acid, inenal, methyl mercaptan, hydrogen sulfide, indole, pyridine, trimethylamine) after leaving the first sampling bag accommodating the aggregate of the polyester fibers (1) for 2 hours are 0. On the other hand, by measuring the gas concentrations in the first sampling bag accommodating the aggregate of the polyester fibers (2) after being left for 2 hours, the reduction rate of ammonia was 29%, the reduction rate of acetic acid was 64%, the reduction rate of isovaleric acid was 54%, the reduction rate of inenal was 34%, the reduction rate of methyl mercaptan was 25%, the reduction rate of hydrogen sulfide was 30%, the reduction rate of indole was 92%, the reduction rate of pyridine was 9%, and the reduction rate of trimethylamine was 13%. In the polyester fibers (2), the concentrations of all the gases were reduced. As is clear from Fig. 14, it has been found that the organic/inorganic hybrid coating film containing the glass particles described above has an excellent deodorizing effect.

### Brief Description of Drawings

Fig. 1 is an enlarged cross-sectional image view illustrating an organic/inorganic hybrid coating film formed on the surface of a base material.
Figs. 2(a) to 2(c) are cross-sectional views for explaining, in time series, a mechanism in which the organic/inorganic hybrid coating film is formed from a coating liquid on the surface of the base material coated with the coating liquid.
Fig. 3 is a cross-sectional view schematically illustrating an example of a state immediately after the surface of the base material is coated with the coating liquid.
Fig. 4 is a cross-sectional view schematically illustrating an example of a state after the organic/inorganic hybrid coating film is deposited on the surface of the base material.
Fig. 5 is a cross-sectional view schematically illustrating another example of the state immediately after the surface of the base material is coated with the coating liquid.
Fig. 6 is a cross-sectional view schematically illustrating another example of the state after the organic/inorganic hybrid coating film is deposited on the surface of the base material.
Fig. 7 is an image view illustrating a structure example of the organic/inorganic hybrid coating film.
Fig. 8 is an image view illustrating an example of a metal ion state in the organic/inorganic hybrid coating film.
Fig. 9 is a diagram illustrating a relationship between a time and an antiviral activity value in the organic/inorganic hybrid coating film formed from the coating liquid containing an organopolysiloxane (siloxane-based solution) as a main component and glass particles mixed therein.
Fig. 10 is a graph illustrating a change in the antiviral activity value with the lapse of time after the coating liquid containing an organopolysiloxane (siloxane-based solution) as a main component and glass particles mixed therein is applied to the surface of the base material.
Fig. 11 is a diagram illustrating an antibacterial activity value of the organic/inorganic hybrid coating film formed from the coating liquid containing an organopolysiloxane (siloxane-based solution) as a main component and glass particles mixed therein.
Fig. 12 is a graph illustrating a relationship between the content of the glass particles in the organic/inorganic hybrid coating film and the antibacterial activity value.
Fig. 13 is a diagram illustrating mold resistance evaluation of the organic/inorganic hybrid coating film formed from the coating liquid containing an organopolysiloxane (siloxane-based solution) as a main component and glass particles mixed therein.
Fig. 14 is a diagram illustrating deodorizing performance evaluation of the organic/inorganic hybrid coating film formed from the coating liquid containing an organopolysiloxane (siloxane-based solution) as a main component and glass particles mixed therein.

### Reference Signs List

- 10: Organic/inorganic hybrid coating film (coating film)
- 11: Base material
- 12: Surface (front surface, back surface) (contact surface)
- 13: Coating liquid (organic and inorganic hybrid polymer)
- 14: Glass particle
- 15: Metal ion
- 15a: Silver ion (Ag⁺)
- 15b: Copper ion (Cu²⁺)
- 15c: Zinc ion (Zn²⁺)
- 16: Front surface layer
- 17: Coating layer
- 18: Back surface layer
- 19: Intermediate layer
- 20: Anchor portion

## Claims

1. A coating film comprising glass particles that are dispersively present,
the coating film being a glass-based coating film based on silicon oxide (SiO₂),
the glass particles being conductive glass containing at least one type among silver ions (Ag⁺), copper ions (Cu²⁺), and zinc ions (Zn²⁺).

2. The coating film according to claim 1, wherein the glass particles dispersively present in the coating film are conductive glass containing the silver ions (Ag⁺) among the silver ions (Ag⁺), the copper ions (Cu²⁺), and the zinc ions (Zn²⁺) and containing at least either of the copper ions (Cu²⁺) and the zinc ions (Zn²⁺).

3. The coating film according to claim 1, wherein the glass particles dispersively present in the coating film are conductive glass containing only the silver ions (Ag⁺), conductive glass containing only the copper ions (Cu²⁺), and conductive glass containing only zinc ions (Zn²⁺).

4. The coating film according to claim 3, wherein the glass particles dispersively present in the coating film are at least the conductive glass containing only the silver ions (Ag⁺) among the conductive glass containing only the silver ions (Ag⁺), the conductive glass containing only the copper ions (Cu²⁺), and the conductive glass containing only the zinc ions (Zn²⁺).

5. The coating film according to claim 2 or 3, wherein the glass particles include glass based on at least one type among vanadium oxide (V₂O₅), tungsten oxide (WO₃), and molybdenum oxide (MoO₃), and phosphorus oxide (P₂O₅).

6. The coating film according to claim 5, wherein the glass particles are vanadium oxide (V₂O₅)-phosphorus oxide (P₂O₅)-based glass containing the silver ions (Ag⁺).

7. The coating film according to claim 6, wherein the glass particles further contain barium oxide (BaO).

8. The coating film according to claim 7, wherein a content of the glass particles diffusively present in the coating film is 0.1 vol% or more to 30 vol% or less.

9. The coating film according to claim 8, wherein the content of the glass particles diffusively present in the coating film is 0.2 vol% or more to 10 vol% or less.

10. The coating film according to claim 9, wherein the glass particles have an average particle diameter D₅₀ of 5 µm or less.

11. The coating film according to claim 10, wherein the glass particles have an average particle diameter D₅₀ of 3 µm or less.

12. The coating film according to claim 11, wherein in the coating film, after a surface of a predetermined base material is coated with a coating liquid for forming the coating film, the metal ions of the glass particles mixed into the coating liquid diffuse into the coating film.

13. The coating film according to claim 12, wherein in the coating film, the metal ions of the glass particles mixed into the coating liquid move to a surface of the coating film while diffusing inside the coating film.

14. The coating film according to claim 13, wherein a stock solution of the coating liquid (starting material of the coating film) is a siloxane-based solution or a silica sol-based solution, and the glass particles are mixed into the siloxane-based solution or the silica sol-based solution.

15. The coating film according to claim 14, wherein the coating film is a glass-based organic/inorganic hybrid coating film.
